# EUROPEAN PATENT SPECIFICATION

(11) **EP 2 610 526 B1**
(45) Date of publication and mention of the grant of the patent: **26.04.2017**
(21) Application number: 11819675.7
(22) Date of filing: 28.06.2011
(51) Int. Cl.: B60K 6/387, B60K 6/46, B60K 6/52, B60L 1/00, B60L 7/26, B60L 3/00, B60L 11/18, B60L 11/14, B60L 15/20, F16H 61/00, B60K 1/00, F16H 57/04, F15B 13/02

(54) **LIQUID FLOW PATH CONTROL DEVICE FOR DRIVE DEVICE FOR VEHICLE**
VORRICHTUNG ZUR STEUERUNG EINES FLÜSSIGKEITSSTRÖMUNGSWEGES FÜR EINE FAHRZEUGANTRIEBSVORRICHTUNG
DISPOSITIF DE COMMANDE DE TRAJET D'ÉCOULEMENT DE LIQUIDE POUR UN DISPOSITIF D'ENTRAÎNEMENT POUR VÉHICULE

(30) Priority: 24.08.2010 JP 2010187539
(43) Date of publication of application: 03.07.2013
(73) Proprietor: Honda Motor Co., Ltd., Minato-ku Tokyo 107-8556 (JP)
(72) Inventor: HOSHINOYA Takeshi, 351-0193 Saitama (JP); NAKAYAMA Shigeru, 351-0193 Saitama (JP)
(74) Representative: Beder, Jens
(86) International application number: PCT/JP2011/064791
(87) International publication number: WO 2012/026204

(56) References cited:
- EP-A2- 0 791 765
- EP-A2- 1 471 288
- JP-A- 2 275 168
- JP-A- 3 234 959
- JP-A- 2000 205 301
- JP-A- 2007 290 656
- US-A- 5 305 862
- US-A1- 2008 182 709

## Description

### Technical Field

The present invention relates to a fluid flow path control unit for a vehicle drive system that includes a motor for generating driving force to drive a vehicle and a hydraulic connecting/disconnecting unit that is provided on a power transmission line defined between the motor and wheels for connecting or disconnecting the transmission of power therebetween.

### Background Art

Conventionally, as this type of a fluid flow path control unit for a vehicle drive system, there is known an oil pressure control unit for a vehicle drive system that is described in JP-2006-258279-A (Patent Literature 1) . As shown in Fig. 32, in this oil pressure control unit 120 for a vehicle drive system, oil discharged from an electric oil pump 121 can be supplied to a hydraulic clutch 107 via a regulator valve 122, a one-way clutch 123 and a clutch oil path selector valve 124, and an accumulator 126 is connected to an oil supply path 125 that connects the one-way clutch 123 with the clutch oil path selector valve 124.

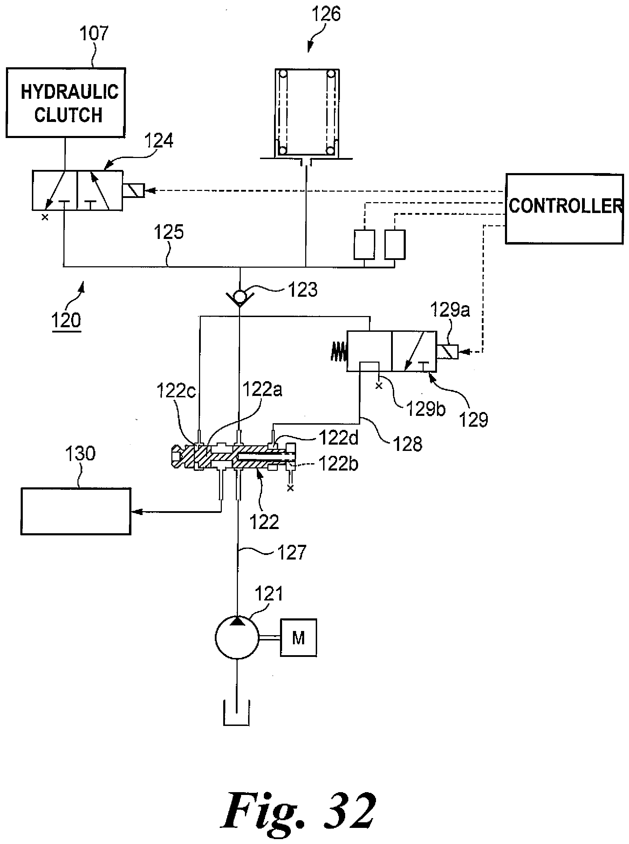

The regulator valve 122 is designed so that the valve element 122a is biased by a spring 122b in a direction (leftwards as seen in Fig. 32, hereinafter, referred to as a non-draining direction) in which a communication between a pump oil path 127 and an oil supplied portion 130 that needs to be lubricated and/or cooled is cut off, is pushed by an oil pressure of the pump oil path 127 that is inputted into an oil chamber 122c that lies at a left end of the regulator valve 122 as seen in the figure in a direction (rightwards as seen in Fig. 32, hereinafter, referred to as a draining direction) in which a communication is established between the pump oil path 127 and the oil supplied portion 130, and is further pushed by an oil pressure that is inputted into an oil chamber 122d that lies at right end of the regulator valve 122 as seen in the figure in the non-draining direction. The right-end oil chamber 122d of the regulator valve 122 can be connected to the pump oil path 127 via a pilot oil path 128 and a solenoid valve 129.

Then, in the event that the oil pressure in the oil supply path 125 is lower than a predetermined pressure when the hydraulic clutch 107 is engaged, the electric oil pump 121 is operated in a high-pressure mode, and the pump oil path 127 and the pilot oil path 128 are connected to each other by energizing a solenoid 129a of the solenoid valve 129, whereby highly pressurized oil in the pump oil path 127 is inputted into the oil chamber 122d. As this occurs, a valve element 122a is shifted in the non-draining direction to thereby cut off the communication between the pump oil path 127 and the oil supplied portion 130, whereby the highly pressurized oil is prevented from flowing to the oil supplied portion 130.

When the oil pressure in the oil supply path 125 exceeds an upper limit value, the electric oil pump 121 is operated in a low-pressure mode, and the connection between the pump oil path 127 and the pilot oil path 128 is cut off by stopping the energization of the solenoid 129a of the solenoid valve 129, whereby the pilot oil path 128 is connected to a drain port 129b, the oil chamber 122d being thereby opened to the atmosphere. As this occurs, the valve element 122a is shifted in the draining direction, and a communication is established between the pump oil path 127 and the oil supplied portion 130, whereby oil is supplied to the oil supplied portion 130. EP 1 471288 A discloses a fluid flow path control unit in accordance with the preamble of claim 1.

### Summary of the Invention

### Problem that the Invention is to Solve

In the oil pressure control unit 120 described in Patent Literature 1, however, until the predetermined oil pressure is inputted to the oil chamber 122c of the regulator valve 122 after starting of the electric oil pump 121, the valve element 122a is not shifted in the draining direction and thereby no oil is supplied to the oil supplied portion 130, and hence it is feared that the lack of lubrication or cooling occurs.

Additionally, in the event that oil is supplied to the oil chamber 122d when the highly pressurized oil is supplied to the hydraulic clutch 107, the valve element 122a is shifted in the non-draining direction and no oil is supplied to the oil supplied portion 130, causing fears that the lack of lubrication or cooling occurs.

The invention has been made in view of these problems, and an object of the invention is to provide a fluid flow path control unit for a vehicle drive system that can supply fluid to a fluid supplied portion that needs to be lubricated or cooled and which can suppress the lack of lubrication or cooling.

### Means for Solving the Problem

To attain the object, Claim 1 defines a fluid flow path control unit (e.g., hydraulic circuits 71, 71A to 71F in embodiment) for a vehicle drive system (e.g., a rear-wheel drive system 1 in embodiment), the vehicle drive system including:
a motor (e.g., motors 2A, 2B, 2C in embodiment) configured to generate driving force to drive a vehicle;
a hydraulic connection/disconnection unit (e.g., hydraulic brakes 60A, 60B in embodiment) that is provided on a power transmission line defined between the motor and a wheel (e.g., rear wheels LWr, RWr in embodiment) configured to connect and disconnect the transmission of power therebetween; and
a fluid supplied portion (e.g., a lubricating and cooling portion 91 in embodiment) that is at least one of the motor and the power transmission line and to which fluid that is used for cooling or lubrication is supplied, the fluid flow path control unit including:
   a fluid supply unit (e.g., an electric oil pump 70 in embodiment) configured to supply fluid to the hydraulic connection/disconnection unit and the fluid supplied portion; and
   a flow path selector valve (e.g., an oil path selector valve 73 in embodiment) that is disposed on the fluid fluid flow path,
wherein the flow path selector valve includes
   a valve element (e.g., a valve element 73a in embodiment) that is switchable between a first operating position (e.g., a low-pressure side position in embodiment) and a second operating position (e.g., a high-pressure side position in embodiment),
   wherein the fluid flow path has a flow path resistance which differs between when the valve element is in the first operating position and when the valve element is in the second operating position, a restoration member (e.g., a spring 73b in embodiment) configured to bias the valve
      element from the second operating position toward the first operating position and
   a fluid chamber (e.g., an oil chamber 73c in embodiment) configured to accommodate fluid for biasing the valve element from the first operating position toward the second operating position,
   wherein the fluid chamber communicates with the fluid supply unit when the valve element is in the first and second operating positions, and the fluid supply from the fluid supply unit is inputted into the fluid chamber so that the valve element is switched between the first and second operating positions in accordance with a pressure of the fluid supplied from the fluid supply unit.

Claim 2 defines, based on Claim 1, the fluid flow path control unit,
wherein the flow path resistance of the fluid flow path is larger when the valve element is in the second operating position than when the valve element is in the first operating position.

Claim 3 defines, based on Claim 2, the fluid flow path control unit,
wherein the fluid flow path has a first fluid flow path (e.g., a first oil path 76a in embodiment) and a second fluid flow path (e.g., a second oil path 76b in embodiment) that are disposed in parallel with each other.

Claim 4 defines, based on Claim 3, the fluid flow path control unit,
wherein the flow path selector valve is configured to establish a communicating state in the first fluid flow path and the second fluid flow path when the valve element is in the first operating position and establishes a cut-off state in the first fluid flow path when the valve element is in the second operating position.

Claim 5 defines, based on Claim 4, the fluid flow path control unit,
wherein the first fluid flow path and the second fluid flow path have different flow path resistances.

Claim 6 defines, based on Claim 5, the fluid flow path control unit, wherein a diametrically constricted portion (e.g., orifices 85a, 85b in embodiment) is formed in at least one of the first fluid flow path and the second fluid flow path.

Claim 7 defines, based on Claim 6, the fluid flow path control unit,
wherein the diametrically constricted portion is formed only in one of the first fluid flow path and the second fluid flow path.

Claim 8 defines, based on Claim 6 or 7, the fluid flow path control unit,
wherein the diametrically constricted portion is a choke.

Claim 9 defines, based on Claim 4, the fluid flow path control unit,
wherein the second fluid flow path is configured to establish a communication that passes round the flow path selector valve between the fluid supply unit and the fluid supplied portion.

Claim 10 defines, based on Claim 4, the fluid flow path control unit,
wherein at least part of the first fluid flow path and at least part of the second fluid flow path are formed within the flow path selector valve.

Claim 11 defines, based on any one of Claims 1 to 10, the fluid flow path control unit,
wherein the hydraulic path is configured to establish a communication between the fluid supply unit and the hydraulic connection/disconnection unit when the valve element is in the first and second operating positions.

Claim 12 defines, based on Claim 11, the fluid flow path control unit,
wherein at least part of the hydraulic path is formed within the flow path selector valve.

Claim 13 defines, based on Claim 3, the fluid flow path control unit,
wherein the flow path selector valve is configured to establish a communicating state in the first fluid flow path when the valve element is in the first operating position and establishes a communicating state in the second fluid flow path when the valve element is in the second operating position, and
wherein a flow path resistance of the second fluid flow path is larger than a flow path resistance of the first fluid flow path.

Claim 14 defines, based on Claim 13, the fluid flow path control unit,
wherein the flow path selector valve is configured to establish a cut-off state in the second fluid flow path when the valve element is in the first operating position and to establish a cut-off state in the first fluid flow path when the valve element is in the second operating position.

Claim 15 defines, based on Claim 13 or 14, the fluid flow path control unit,
wherein a flow path resistance structure (e.g., the orifices 85a, 85b in embodiment) is disposed in each of the first fluid flow path and the second fluid flow path, and
wherein the flow path resistance structure in the first fluid flow path and the flow path resistance structure in the second fluid flow path are formed so that a flow path resistance of the flow path resistance structure in the second fluid flow path is larger than that of the flow path resistance structure in the first fluid flow path.

Claim 16 defines, based on Claim 15, the fluid flow path control unit,
wherein the flow path resistance structures are diametrically constricted portions (e.g., the orifices 85a, 85b in embodiment) that are disposed in the flow paths, and
wherein the first fluid flow path and the second fluid flow path are formed so that a minimum flow path sectional area of the diametrically constricted portion of the second fluid flow path is smaller than a minimum flow path sectional area of the diametrically constricted portion of the first fluid flow path.

Claim 17 defines, based on Claim 13 or 14, the fluid flow path control unit,
wherein the first fluid flow path and the second fluid flow path are formed so that a flow path sectional area of the second fluid flow path is smaller than a flow path sectional area of the first fluid flow path.

Claim 18 defines, based on Claim 13 or 14, the fluid flow path control unit,
wherein the first fluid flow path and the second fluid flow path are formed so that a flow path length of the second fluid flow path that extends from the fluid flow path selector valve to the fluid supplied portion is longer than a flow path length of the first fluid flow path that extends from the fluid flow path selector valve to the fluid supplied portion.

Claim 19 defines, based on any one of Claims 3 to 18, the fluid flow path control unit,
wherein the first fluid flow path and the second fluid flow path are configured to merge downstream of the flow path selector valve.

### Advantage of the Invention

According to Claim 1, since the flow path resistances of the fluid flow paths are different, it is possible to adjust appropriately the flow rate of fluid supplied to the fluid supplied portion and the fluid pressure imparted to the hydraulic connection/disconnection unit in each of the operating positions.

According to Claim 2, since the flow path resistance of the fluid flow path is larger when the valve element is in the second operating position than when the valve element is in the first operating position, it is possible to suppress the oversupply of fluid to the fluid supplied portion. In addition, the oil pressure imparted to the hydraulic connection/disconnection unit can be increased as required.

According to Claim 3, by having the two different fluid flow paths that are disposed parallel to each other in addition to the flow path selector valve, the flow path resistance can easily be adjusted.

According to Claim 4, since the number of flow paths to the fluid supplied portion is decreased when the valve element is in the second operating position, the flow path resistance becomes large.

According to Claim 5, it is possible to adjust finely the flow rate of fluid that is supplied to the fluid supplied portion when the valve element is in the first operating position and in the second operating position.

According to Claim 6, by adjusting the flow path resistance at the diametrically constricted portion, the flow path resistance is adjusted easily.

According to Claim 7, by forming the diametrically constricted portion only in one of the first fluid flow path and the second fluid flow path, the first fluid flow path and the second fluid flow path are allowed to have the different flow path resistances.

According to Claim 8, it is difficult to supply fluid to the fluid supplied portion when the temperature of fluid is low, and the fluid pressure in the hydraulic connection/disconnection unit can be raised quickly. Further, even after the communication in the first fluid flow path is cut off, the fluid pressure so raised can be held long.

According to Claim 9, it is possible to ensure the flow rate of the second fluid flow path in a stable fashion without involvement of the operation of the valve element.

According to Claim 10, the first and second fluid flow paths can be disposed near to each other.

According to Claim 11, it is possible to supply fluid to the hydraulic connection/disconnection unit in a stable fashion without involvement of the operation of the valve element.

According to Claim 12, it is possible not only to simplify the flow path but also to save space therefor.

According to Claim 13, since the communication is established in the second fluid flow path whose flow path resistance to the fluid supplied portion is larger when the valve element is in the second operating position, it is possible to suppress the oversupply of fluid to the fluid supplied portion.

According to Claim 14, the communication is established only in one of the flow paths when the valve element is in the first operating position and in the second operating position, thereby making it possible to adjust the flow path resistance accurately.

According to Claim 15, it is possible to adjust the flow path resistances by the flow path resistance structures, thereby making it possible to adjust the flow path resistances easily.

According to Claim 16, it is possible to adjust the flow path sectional areas by the diametrically constricted portions, thereby making it possible to adjust the flow path resistances easily.

According to Claim 17, it is possible to adjust the flow path resistances finely by adjusting the flow path sectional areas, thereby making it possible to adjust finely the respective flow rates of the flow paths.

According to Claim 18, it is possible to adjust the flow path resistances finely by adjusting the flow path lengths, thereby making it possible to adjust finely the respective flow rates of the flow paths.

According to Claim 19, by merging the first fluid flow path with the second fluid flow path downstream of the flow path selector valve, part of the fluid flow path control unit can be commonized, thereby making it possible to simplify the flow path.

### Brief Description of the Drawings

Fig. 1 is a block diagram showing a schematic configuration of a hybrid vehicle which constitutes an embodiment of a vehicle in which a fluid flow path control unit according to the invention can be mounted.
Fig. 2 is a vertical sectional view of a rear-wheel drive system that is controlled by the fluid flow path control unit according to the invention.
Fig. 3 is a partially enlarged view of the rear-wheel drive system shown in Fig. 2.
Fig. 4 is a perspective view showing a state in which the rear-wheel drive system is mounted on a frame.
Fig. 5 is a hydraulic circuit diagram of a hydraulic pressure control unit of a first embodiment.
Fig. 6(a) is an explanatory diagram when an oil path selector valve is positioned in a low-pressure side position, and Fig. 6(b) is an explanatory diagram when the oil path selector valve is positioned in a high-pressure side position.
Fig. 7(a) is an explanatory diagram when a brake oil path selector valve is positioned in a valve closing position, and Fig. 7(b) is an explanatory diagram when the brake oil path selector valve is positioned in a valve opening position.
Fig. 8(a) is an explanatory diagram when a solenoid valve is de-energized, and Fig. 8(b) is an explanatory diagram when the solenoid valve is energized.
Fig. 9 is a hydraulic circuit diagram of the hydraulic pressure control unit when the hydraulic brakes are in a released state while the vehicle is being driven.
Fig. 10 is a hydraulic circuit diagram of the hydraulic pressure control unit when the hydraulic brakes are in a weak applied state.
Fig. 11 is a hydraulic circuit diagram of the hydraulic pressure control unit when the hydraulic brakes are in an applied state.
Fig. 12 is a graph showing load characteristics of an electric oil pump.
Fig. 13 is a table depicting a relation between a front-wheel drive system and the rear-wheel drive system in various vehicle states together with operating states of motors and states of a hydraulic circuit.
Fig. 14 is a speed collinear diagram of the rear-wheel drive system when the vehicle is stopped.
Fig. 15 is a speed collinear diagram of the rear-wheel drive system when the vehicle is traveling forwards at low vehicle speeds.
Fig. 16 is a speed collinear diagram of the rear-wheel drive system when the vehicle is traveling forwards at intermediate vehicle speeds.
Fig. 17 is a speed collinear diagram of the rear-wheel drive system when the vehicle is decelerated for regeneration.
Fig. 18 is a speed collinear diagram of the rear-wheel drive system when the vehicle is traveling forwards at high speeds.
Fig. 19 is a speed collinear diagram of the rear-wheel drive system when the vehicle is reversed.
Fig. 20 is a timing chart while the vehicle is being driven.
Fig. 21 is a flowchart showing a control flow of the electric oil pump.
Fig. 22 is a hydraulic circuit diagram of a hydraulic pressure control unit of a second embodiment.
Fig. 23 is a hydraulic circuit diagram of a hydraulic pressure control unit of a third embodiment.
Fig. 24 is a hydraulic circuit diagram of a hydraulic pressure control unit of a fourth embodiment.
Fig. 25 is a hydraulic circuit diagram of a hydraulic pressure control unit of a fifth embodiment.
Fig. 26 is a hydraulic circuit diagram of a hydraulic pressure control unit of a sixth embodiment.
Fig. 27 is a hydraulic circuit diagram of a hydraulic pressure control unit of a seventh embodiment.
Fig. 28 is a hydraulic circuit diagram showing a first modified example of the seventh embodiment.
Figs. 29(a) to 29(c) are hydraulic circuit diagrams showing a second modified example of the seventh embodiment.
Figs. 30(a) to 30(c) are hydraulic circuit diagrams showing the second modified example of the seventh embodiment.
Fig. 31 is a block diagram showing a schematic configuration of a hybrid vehicle which constitutes another embodiment of a vehicle in which the fluid flow path control unit according to the invention can be mounted.
Fig. 32 is a schematic diagram of a vehicle drive system described in Patent Literature 1.

### Mode for Carrying out the Invention

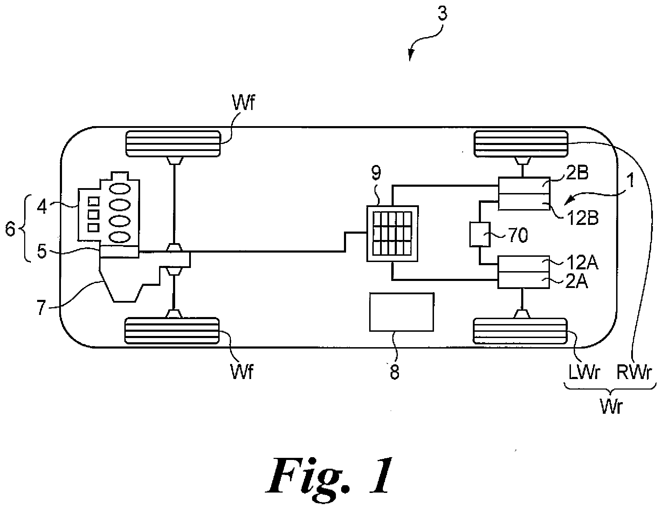

Firstly, one embodiment of a vehicle drive system to which a fluid flow path control unit according to the invention can be applied will be described based on Figs. 1 to 4. In the following description, a hydraulic pressure control unit will be described as the fluid flow path control unit.

A vehicle drive system to which a hydraulic pressure control unit according to the invention can be applied is such as to use motors as drive sources for driving rear axles and is used in a vehicle incorporating a drive system shown in Fig. 1. In the following description, the vehicle drive system will be described as being used as a rear-wheel drive system. However, the vehicle drive system of the invention may be used for a front-wheel drive system.

A vehicle 3 shown in Fig. 1 is a hybrid vehicle having a drive system 6 (hereinafter, referred to as a front-wheel drive system) in which an internal combustion engine 4 and a motor 5 are connected in series at a front part of the vehicle. Power of this front-wheel drive system 6 is transmitted to front wheels Wf via a transmission 7, while power of a drive system 1 (hereinafter, referred to as a rear-wheel drive system) that is provided at a rear part of the vehicle separately from the front-wheel drive system 6 is designed to be transmitted to rear wheels Wr (RWr, LWr). The motor 5 of the front-wheel drive system 6 and motors 2A, 2B of the rear-wheel drive system 1 on a rear wheel Wr side are connected to a battery 9 via a PDU 8 (Power Drive unit), so that electric power supply from the battery 9 and energy regeneration to the battery 9 are enabled. Reference numeral 8 is a control unit for controlling variously the whole of the vehicle.

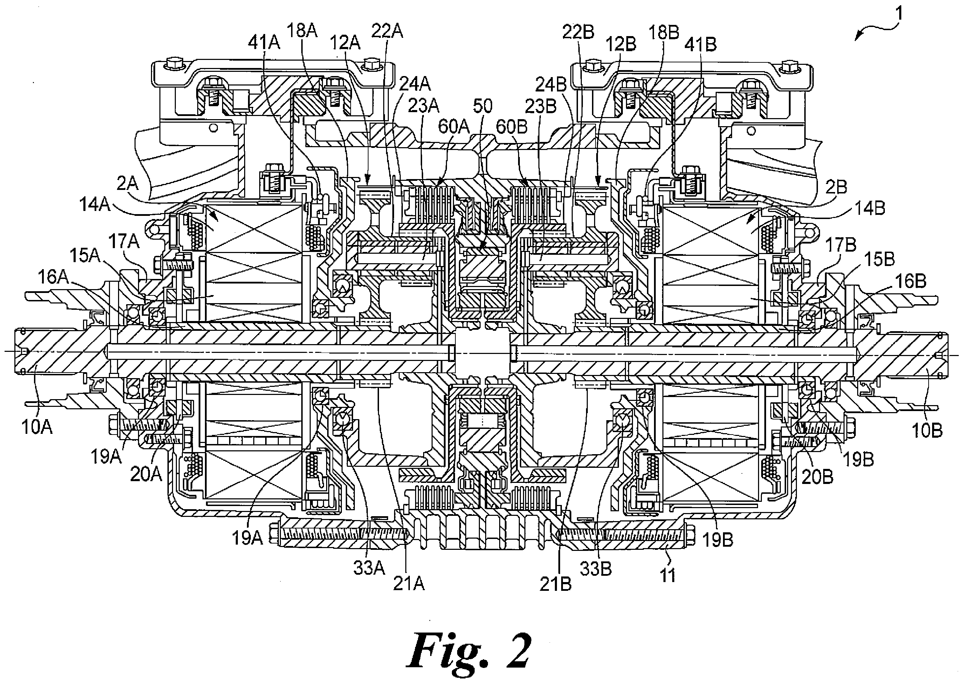

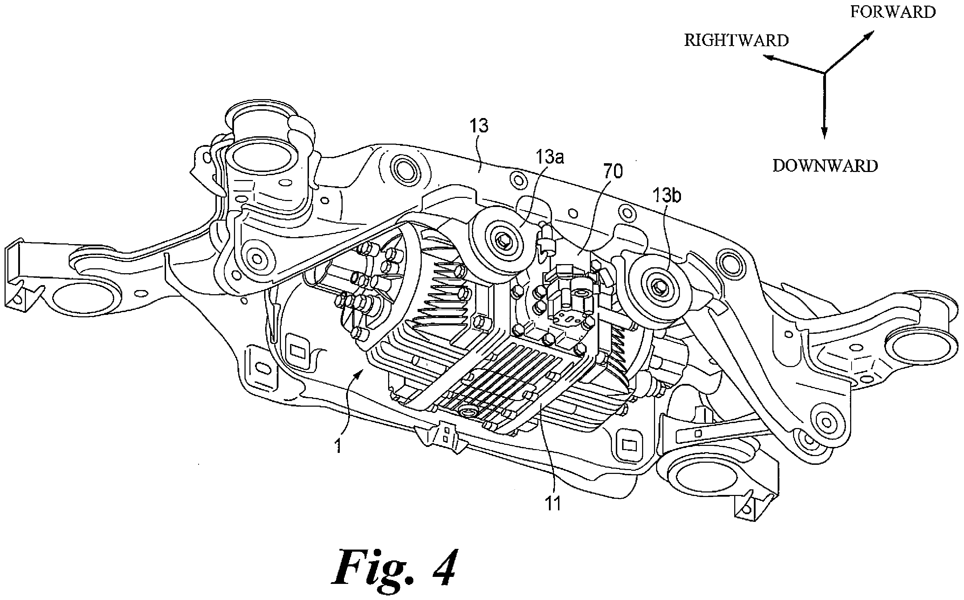

Fig. 2 is an overall vertical sectional view of the rear-wheel drive system 1. In the same figure, reference numerals 10A, 10B denote left and right axles of the rear wheels Wr of the vehicle, and the left and right axles are disposed coaxially in a vehicle's width direction. A reduction gear case 11 of the rear-wheel drive system 1 is formed into a substantially cylindrical shape in whole. The axle driving motors 2A, 2B and epicyclic reduction gears 12A, 12B that decrease the driving revolution speeds of the motors 2A, 2B are disposed concentrically with the axles 10A, 10B in an interior of the reduction gear case 11. The motor 2A and the epicyclic reduction gear 12A control a left rear wheel LWr, and the motor 2B and the epicyclic reduction gear 12B control a right rear wheel RWr. The motor 2A and the epicyclic reduction gear 12A and the motor 2B and the epicyclic reduction gear 12B are disposed symmetric laterally in the vehicle's width direction within the reduction gear case 11. As shown in Fig. 4, the reduction gear case 11 is supported by supporting portions 13a, 13b of a frame member 13 which makes up part of a frame which makes up, in turn, a framework of the vehicle 3 and a frame, not shown, of the rear-wheel drive system 1. The supporting portions 13a, 13b are provided left and right with respect to the center of the frame member 13 in the vehicle's width direction. Note that in Fig. 4, arrows denote a positional relationship when the rear-wheel drive system 1 is mounted in the vehicle.

Stators 14A, 14B of the motors 2A, 2B are fixed to insides of both left and right end portions of the reduction gear case 11, and annular rotors 15A, 15B are disposed rotatably on inner circumferential sides of the stators 14A, 14B. Cylindrical shafts 16A, 16B that surround outer circumferences of the axles 10A, 10B are connected to inner circumferential portions of the rotors 15A, 15B. These cylindrical shafts 16A, 16B are supported on end walls 17A, 17B and intermediate walls 18A, 18B of the reduction gear case 11 via bearings 19A, 19B so as to rotate relative to and concentric with the axles 10A, 10B. Resolvers 20A, 20B that feed information on rotational positions of the rotors 15A, 15B back to a controller (not shown) for controlling the motors 2A, 2B are provided on outer circumferences of one end portions of the cylindrical shafts 16A, 16B and on the end walls 17A, 17B of the reduction gear case 11.

The epicyclic reduction gears 12A, 12B include sun gears 21A, 21B, pluralities of planetary gears 22A, 22B that are caused to mesh with the sun gears 21, planetary carriers 23A, 23B that support these planetary gears 22A, 22B and ring gears 24A, 24B that are caused to mesh with outer circumferential sides of the planetary gears 22A, 22B. Driving forces from the motors 2A, 2B are inputted into the epicyclic reduction gears 12A, 12B from the sun gears 21 A, 21B and the decelerated driving forces are outputted therefrom through the planetary carriers 23A, 23B.

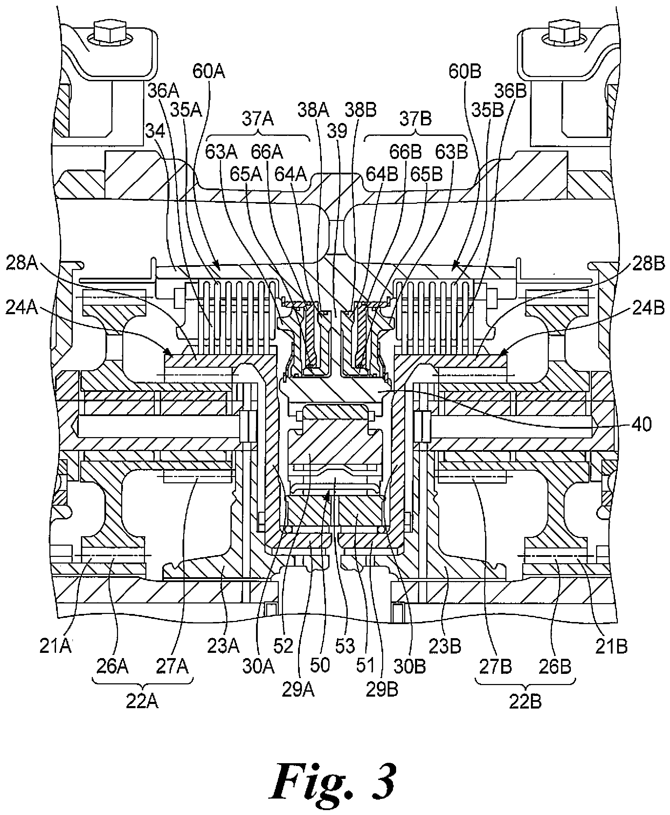

The sun gears 21A, 21B are formed integrally with the cylindrical shafts 16A, 16B. For example, as shown in Fig. 3, the planetary gears 22A, 22B are double pinions that have first pinions 26A, 26B that are larger in diameter and which are caused to mesh directly with the sun gears 21A, 21B and second pinions 27A, 27B that are smaller in diameter than the first pinions 26A, 26B, and the first pinions 26A, 26B and the second pinions 27A, 27B are formed integrally in such a manner that the first and second pinions are concentric and are offset in an axial direction. The planetary gears 22A, 22B are supported by the planetary carriers 23A, 23B. Axially inward end portions of the planetary carriers 23A, 23B extend radially inwards and spline fit on the axles 10A, 10B, whereby the planetary carriers 23A, 23B are supported on the axles 10A, 10B so as to rotate together therewith. The planetary carriers 23A, 23B are also supported on the intermediate walls 18A, 18B via bearings 33A, 33B.

The intermediate walls 18A, 18B divide motor accommodating spaces where the motors 2A, 2B are accommodated and reduction gear spaces where epicyclic reduction gears 12A, 12B are accommodated and are bent so that an axial space defined therebetween expands from a radially outward side to a radially inward side. Then, the bearings 33A, 33B that support the planetary carriers 23A, 23B are disposed on radially inward sides of the intermediate walls 18A, 18B and on sides thereof which face the epicyclic reduction gears 12A, 12B, and bus rings 41A, 41B for the stators 14A, 14B are disposed on radially outward sides of the intermediate walls 18A, 18B and sides thereof which face the motors 2A, 2B (refer to Fig. 2).

The ring gears 24A, 24B include gear portions 28A, 28B that mesh with the second pinions 27A, 27B which are smaller in diameter on inner circumferential surfaces, small diameter portions 29A, 29B that are smaller in diameter than the gear portions 28A, 28B and which are disposed so as to face oppositely each other in an intermediate position of the reduction gear case 11 and connecting portions 30A, 30B that connect axially inward end portions of the gear portions 28A, 28B with axially outward end portions of the small diameter portions 29A, 29B in a radial direction. In the case of this embodiment, maximum radii of the ring gears 24A, 24B are set so as to be smaller than maximum distances of the first pinions 26A, 26B from centers of the axles 10A, 10B. Both the small diameter portions 29A, 29B spline fit on an inner race 51 of one-way clutch 50, which will be described later, and the ring gears 24A, 24B rotates together with the inner race 51 of the one-way clutch 50.

Incidentally, a cylindrical space portion is secured between the reduction gear case 11 and the ring gears 24A, 24B. Then, hydraulic brakes 60A, 60B, which are configured as brake units for the ring gears 24A, 24B, are disposed in the space portion so as to overlap the first pinions 26A, 26B in the radial direction and overlap the second pinions 27A, 27B in the axial direction. In the hydraulic brakes 60A, 60B, pluralities of fixed plates 35A, 35B that spline fit on an inner circumferential surface of a cylindrical, radially outward support portion 34 that extends in the axial direction on a radially inward side of the reduction gear case 11 and pluralities of rotational plates 36A, 36B that spline fit on outer circumferential surfaces of the ring gears 24A, 24B are disposed alternately, and these plates 35A, 35B, 36A, 36B are operated to be engaged with and disengaged from each other by annular pistons 37A, 37B. The pistons 37A, 37B are accommodated in a reciprocating fashion in annular cylinder compartments 38A, 38B that are formed between a horizontally dividing wall 39 that extends radially inwards from the intermediate position of the reduction gear case 11 so as to divide horizontally the interior of the reduction gear case 11 into left and right portions and the radially outward support portion 34 and a radially inward support portion 40 which are connected with each other by the horizontally dividing wall 39. The pistons 37A, 37B are caused to advance by introducing highly pressurized oil into the cylinder compartments 38A, 38B, while the pistons 37A, 37B are withdrawn by discharging the oil from the cylinder compartments 38A, 38B. Note that the hydraulic brakes 60A, 60B are connected to an electric oil pump 70 that is disposed between the support portions 13a, 13b of the frame member 13 as shown in Fig. 4.

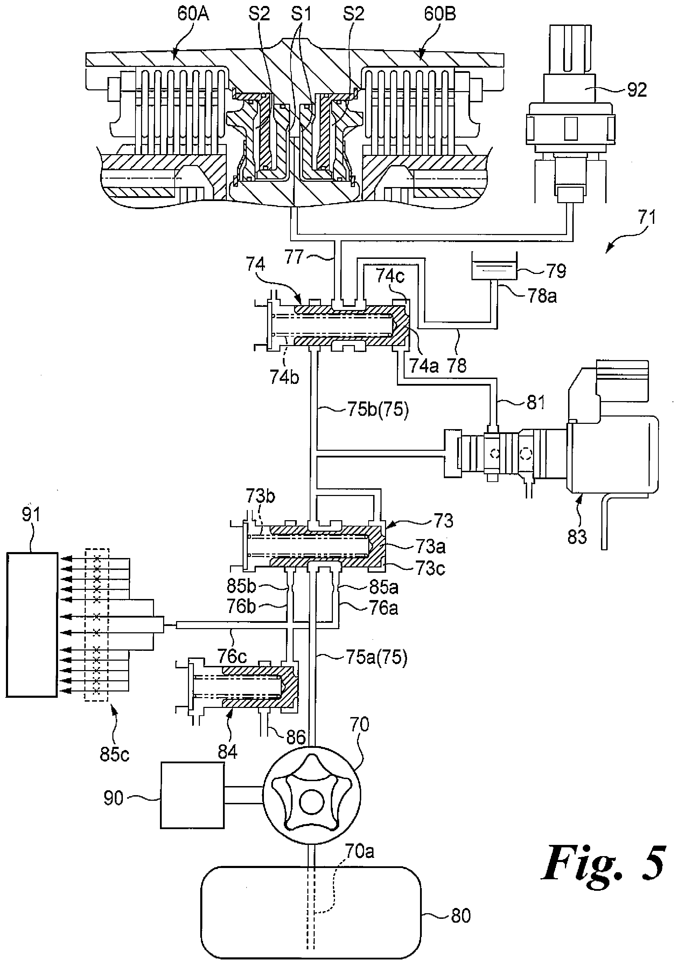

More specifically, the pistons 37A, 37B have first piston walls 63A, 63B and second piston walls 64A, 64B which are disposed forward and rearward of each other in the axial direction. These piston walls 63A, 63B, 64A, 64B are connected together by cylindrical inner circumferential walls 65A, 65B. Consequently, annular spaces that are opened radially outwards are formed between the first piston walls 63A, 63B and the second piston walls 64A, 64B, and these annular spaces are partitioned axially horizontally by partition members 66A, 66B that are fixed to inner circumferential surfaces of outer walls of the cylinder compartments 38A, 38B. Spaces defined between the horizontally dividing wall 39 of the reduction gear case 11 and the second piston walls 64A, 64B are configured as first hydraulic chambers S1 into which highly pressurized oil is introduced directly (refer to Fig. 5), and spaces defined between the partition members 66A, 66B and the first piston walls 63A, 63B are configured as second hydraulic chambers S2 that communicate with the first hydraulic chambers S1 by way of through holes formed in the inner circumferential walls 65A, 65B (refer to Fig. 5). Spaces defined between the second piston walls 64A, 64B and the partition members 66A, 66B communicate with the atmospheric pressure.

In these hydraulic brakes 60A, 60B, oil is introduced into the first hydraulic chambers S1 and the second hydraulic chambers S2 from a hydraulic circuit 71, which will be described later, and the fixed plates 35A, 35B and the rotational plates 36A, 36B can be pressed against each other by virtue of the pressure of the oil that acts on the first piston walls 63A, 63B and the second piston walls 64A, 64B. Consequently, a large pressure bearing surface area can be obtained by the first and second piston walls 63A, 63B, 64A, 64B that are disposed forwards and rearwards of each other in the axial direction. Therefore, it is possible to obtain a large pressing force to be applied to the fixed plates 35A, 35B and the rotational plates 36A, 36B while suppressing an increase in radial surface area of the pistons 37A, 37B.

In the case of the hydraulic brakes 60A, 60B, the fixed plates 35A, 35B are supported on the radially outward support portion 34 that extends from the reduction gear case 11, while the rotational plates 36A, 36B are supported on the ring gears 24A, 24B. Therefore, when both the plates 35A, 35B, 36A, 36B are pressed against each other by the pistons 37A, 37B, a braking force is applied to the ring gears 24A, 24B to fix them in place by virtue of frictional engagement of both the plates 35A, 35B and 36A, 36B. Then, when the engagement of the plates implemented by the pistons 37A, 37B is released, the ring gears 24A, 24B are permitted to rotate freely.

A space portion is secured between the connecting portions 30A, 30B of the ring gears 24A, 24B that face oppositely each other in the axial direction, and the one-way clutch 50 is disposed in the space portion, the one-way clutch 50 being adapted to transmit only power acting in one direction on the ring gears 24A, 24B and to cut off power acting in the other direction. The one-way clutch 50 is such that a number of sprags 53 are interposed between the inner race 51 and an outer race 52, and the inner race 51 spline fits on the small diameter portions 29A, 29B of the ring gears 24A, 24B so as to rotate together therewith. The outer race 52 is positioned and is restricted from rotation by the radially inward support portion 40.

The one-way clutch 50 is brought into engagement when the vehicle 3 travels forwards based on the power of the motors 2A, 2B so as to lock the rotation of the ring gears 24A, 24B. To describe this more specifically, the one-way clutch 50 is put in an engaged state when rotational power in a forward direction (a rotational direction when the vehicle 3 travels forwards) at the motors 2A, 2B is inputted to the wheels Wr, while the one-way clutch 50 is put in a disengaged state when backward rotational power at the motors 2A, 2B is inputted into the wheels Wr. The one-way clutch 50 is put in the disengaged state when forward rotational power at the wheels Wr is inputted into the motors 2A, 2B, while the one-way clutch 50 is put in the engaged state when backward rotational force at the wheels Wr is inputted into the motors 2A, 2B.

In this way, in the rear-wheel drive system 1 of this embodiment, the one-way clutch 50 and the hydraulic brakes 60A, 60B are provided in parallel on a power transmission line between the motors 2A, 2B and the wheels Wr.

Next, referring to Figs. 5 to 8, the hydraulic circuit that makes up a hydraulic pressure control unit according to the invention will be described.

The hydraulic circuit 71 can supply oil that is taken into the electric oil pump 70 from an oil inlet port 70a disposed in an oil pan 80 and which is discharged from the electric oil pump 70 to the first hydraulic chambers S1 of the hydraulic brakes 60A, 60B via an oil path selector valve 73 and a brake oil path selector valve 74 and also can supply the oil to a lubricating and cooling portion 91 for the motors 2A, 2B and the epicyclic reduction gears 12A, 12B via the oil path selector valve 73. The electric oil pump 70 can be driven (operated) in at least two modes of a high-pressure mode and a low-pressure mode by a motor 90 which is made up of a position sensor-less and brushless direct current motor and is controlled through a PID control. Reference numeral 92 denotes a sensor for detecting an oil temperature and an oil pressure in a brake oil path 77.

The oil path selector vale 73 is connected to a first line oil path 75a of a line oil path 75 that is disposed on a side that faces the electric oil pump 70, a second line oil path 75b of the line oil path 75 that is disposed on a side that faces the brake oil path selector valve 74, a first oil path 76a that communicates with the lubricating and cooling portion 91 and a second oil path 76b that communicates with the lubricating and cooling portion 91. The oil path selector valve 73 includes a valve element 73a that establishes a normal communication between the first line oil path 75a and the second line oil path 75b and which causes the line oil path 75 to communicate selectively with the first oil path 76a or the second oil path 76b, a spring 73b that biases the valve element 73a in a direction (rightwards in Fig. 5) in which the line oil path 75 and the first oil path 76a are caused to communicate with each other, and an oil chamber 73c that pushes the valve element 73a by virtue of an oil pressure in the line oil path 75 in a direction (leftwards in Fig. 5) in which the line oil path 75 and the second oil path 76b are caused to communicate with each other. Consequently, the valve element 73a is biased by the spring 73b in the direction (rightwards in Fig. 5) in which the line oil path 75 and the first oil path 76a are caused to communicate with each other and is pushed by the oil pressure in the line oil path 75 that is inputted into the oil chamber 73c at a right end of the oil path selector valve 73 as seen in the figure in the direction (leftwards in Fig. 5) in which the line oil path 75 and the second oil path 76b are caused to communicate with each other.

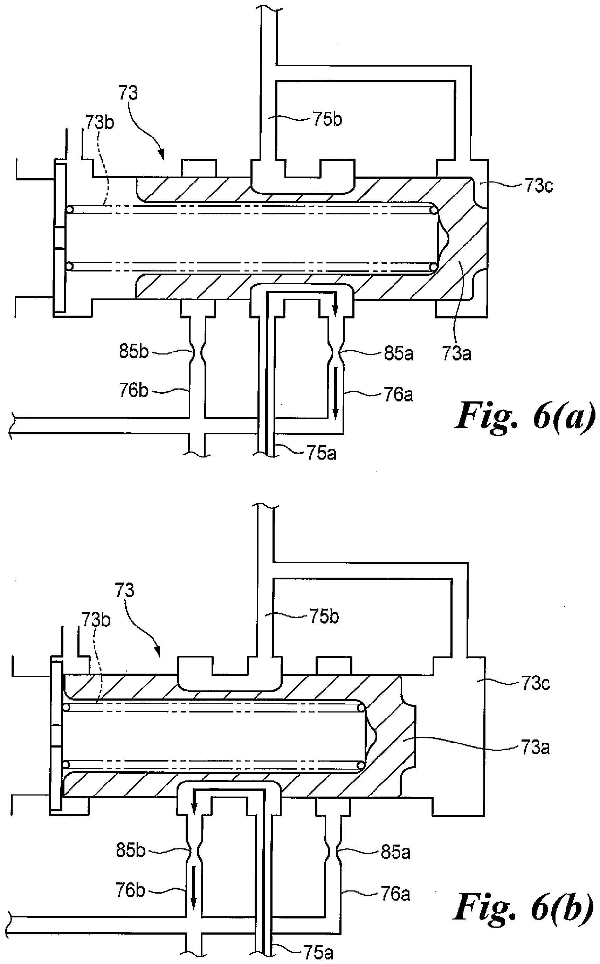

The biasing force of the spring 73b is set so that under an oil pressure in the line oil path 75 that is inputted into the oil chamber 73c while the electric oil pump 70 is operating in the low-pressure mode, which will be described later, as shown in Fig. 6(a), the valve element 73a stays stationary, and the line oil path 75 is cut off from the second oil path 76b and is then caused to communicate with the first oil path 76a (hereinafter, the position of the valve element 73a shown in Fig. 6(a) will be referred to as a low-pressure side position). Under an oil pressure in the line oil path 75 that is inputted into the oil chamber 73c while the electric oil pump 70 is operating in the high-pressure mode, which will be described later, as shown in Fig. 6(b), the valve element 73a moves and the line oil path 75 is cut off from the first oil path 76a and is then caused to communicate with the second oil path 76b (hereinafter, the position of the valve element 73a shown in Fig. 6(b) will be referred to as a high-pressure side position).

The brake oil path selector valve 74 is connected to the second line oil path 75b that makes up the line oil path 75, the brake oil path 77 that is connected to the hydraulic brakes 60A, 60B, and a reservoir portion 79 via a high-positioned drain 78. The brake oil path selector valve 74 includes a valve element 74a that establishes and cuts off a communication between the second line oil path 75b and the brake oil path 77, a spring 74b that biases the valve element 74a in a direction (rightwards in Fig. 5) in which a communication between the second line oil path 75b and the brake oil path 77 is cut off, and an oil chamber 74c that pushes the valve element 74a by virtue of an oil pressure in the line oil path 75 in a direction (leftwards in Fig. 5) in which the second line oil path 75b and the brake oil path 77 are caused to communicate with each other. Consequently, the valve element 74a is biased by the spring 74b in the direction (rightwards in Fig. 5) in which the communication between the second line oil path 75b and the brake oil path 77 is cut off and can be pushed by virtue of the oil pressure in the line oil path 75 that is inputted into the oil chamber 74c in the direction (leftwards in Fig. 5) in which the second line oil path 75b and the brake oil path 77 are caused to communicate with each other.

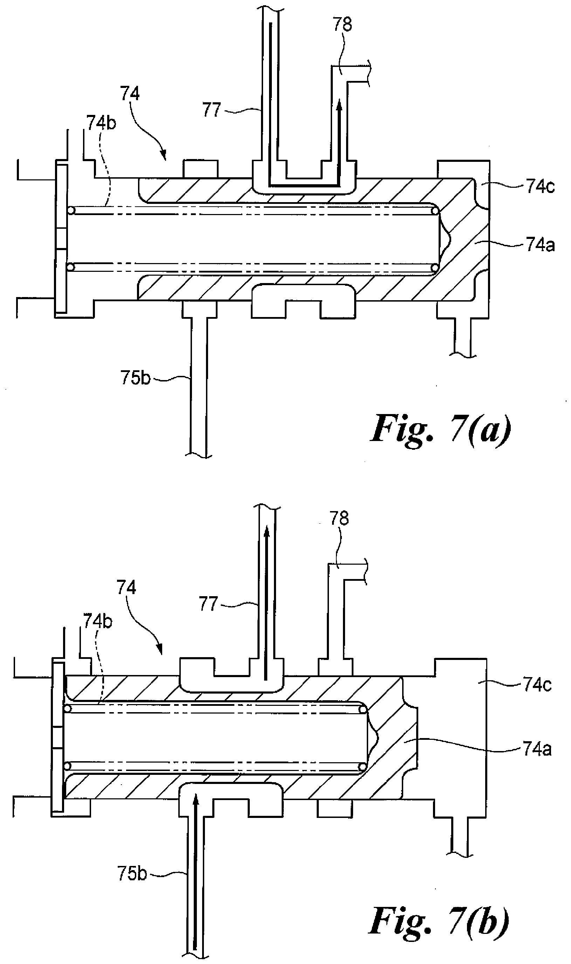

The biasing force of the spring 74b is set so that the valve element 74a is shifted from a valve closing position shown in Fig. 7(a) to a valve opening position shown in Fig. 7(b) by virtue of the oil pressure in the line oil path 75 that is inputted into the oil chamber 74c while the electric pump 70 is operating in the low-pressure mode and the high-pressure mode, so that the brake oil path 77 is cut off from the high-positioned drain 78 and is then caused to communicate with the second line oil path 75b. Namely, the oil pressure of the line oil path75 that is inputted into the oil chamber 74c exceeds the biasing force of the spring 74c even when the electric oil pump 70 is caused to operate either in the low-pressure mode or in the high-pressure mode, whereby the brake oil path 77 is cut off from the high-positioned drain 78 and is then caused to communicate with the second line oil path 75b.

With the second line oil path 75b cut off from the brake oil path 77, the hydraulic brakes 60A, 60B are caused to communicate with the reservoir portion 79 via the brake oil path 77 and the high-positioned drain 78. The reservoir portion 79 is disposed in a higher position than the oil pan 80 in a vertical direction. More preferably, the reservoir portion 79 is disposed so that a vertically highest portion of the reservoir portion 79 becomes vertically higher than a middle point between vertically highest portions and vertically lowest portions of the first hydraulic chambers S1 of the hydraulic brakes 60A, 60B. Consequently, with the brake oil path selector valve 74 closed, oil reserved in the first hydraulic chambers S1 of the hydraulic brakes 60A, 60B is not discharged directly into the oil pan 80 but is discharged into the reservoir portion 79 for storage. Note that oil that overflows from the reservoir portion 79 is discharged into the oil pan 80. A reservoir portion side end portion 78a of the high-positioned drain 78 is connected to a bottom surface of the reservoir portion 79.

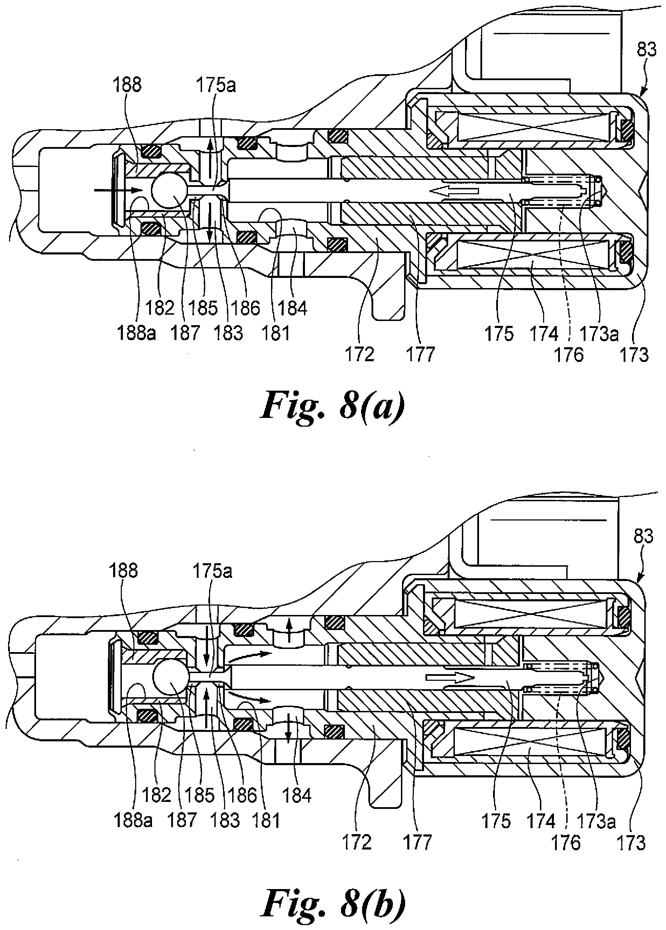

The coil chamber 74c of the brake oil path selector valve 74 can be connected to the second line oil path 75b that makes up the line oil path 75 via a pilot oil path 81 and a solenoid valve 83. The solenoid valve 83 is made up of an electromagnetic three-way valve that is controlled by the control unit 8, and when the control unit 8 causes a solenoid 174 (refer to Fig. 8) of the solenoid valve 83 to be de-energized, the second line oil path 75b is connected to the pilot oil path 81, so that the oil pressure in the line oil path 75 is inputted into the oil chamber 74c.

As shown in Fig. 8, the solenoid valve 83 includes a three-way valve member 172, the solenoid 174 that is provided in a case member 173 and which receives electric power that is supplied by way of a cable, not shown, to thereby be excited, a solenoid valve element 175 that receives excitation force of the solenoid 174 to thereby be drawn rightwards, a solenoid spring 176 that is accommodated in a spring holding recessed portion 173a that is formed in the center of the case member 173 so as to bias the solenoid valve element 175 leftwards, and a guide member 177 that is provided within the three-way valve member 172 so as to guide the solenoid valve element 175 in a reciprocating motion in a slidable fashion.

The three-way valve member 172 is a substantially bottomed cylindrical member and has a right recessed hole 181 that is formed along a center line thereof from a right end portion substantially to a middle portion, a left recessed hole 182 that is formed similarly along the center line from a left end portion to the proximity of the right recessed hole 181, a first radial hole 183 that is formed between the right recessed hole 181 and the left recessed hole 182 along a direction that is at right angles to the center line, a second radial hole 184 that communicates with a substantially middle portion of the right recessed hole 181 and which is formed along the direction that is at right angles to the center line, a first axial hole 185 that is formed along the center line and which establishes a communication between the left recessed hole 182 and the first radial hole 183, and a second axial hole 186 that is formed along the center line and which establishes a communication between the first radial hole 183 and the right recessed hole 181.

A ball 187 is placed at a bottom portion of the left recessed hole 182 of the three-way valve member 172 so that the ball 187 can move leftward and rightward directions so as to open and close the first axial hole 185, and a cap 188 which restricts the displacement of the ball 187 from the left recessed hole 182 is fitted at an entrance side of the left recessed hole 182. A through hole 188a which communicates with the first axial hole 185 is formed in the cap 188 along the center line.

The second axial hole 186 is opened or closed when a root portion of an opening and closing projection 175a that is formed at a left end portion of the solenoid valve element 175 that reciprocates horizontally moves away from the same hole or comes in contact with the hole. The ball 187 that opens and closes the first axial hole 185 is moved leftwards and rightwards at a distal end portion of the opening and closing projection 175a of the solenoid valve element 175 that moves leftwards and rightwards.

Then, in the solenoid valve 83, by de-energizing the solenoid 174 (stopping the supply of electric power thereto), as shown in Fig. 8(a), receiving the biasing force of the solenoid valve 176, the solenoid valve element 175 moves leftwards, and the distal end portion of the opening and closing projection 175a of the solenoid valve element 175 pushes the ball 187, whereby the first axial hole 185 is opened, while the second axial hole 186 is closed when the root portion of the opening and closing projection 175a of the solenoid valve element 175 comes into contact with the second axial hole 186. By adopting this configuration, the second line oil path 75b that makes up the line oil path 75 communicates with the oil chamber 74c from the first axial hole 185 and the first radial hole 183 via the pilot oil path 81 (hereinafter, the position of the solenoid valve element 175 shown in Fig. 8(a) will from time to time be referred to as a valve opening position).

By energizing the solenoid 174 (supplying electric power thereto), as shown in Fig. 8(b), receiving the excitation force of the solenoid 174, the solenoid valve element 175 moves rightwards against the biasing force of the solenoid spring 176, and the oil pressure from the through hole 188a pushes the ball 187, whereby the first axial hole 185 is closed, and the root portion of the opening and closing projection 175a of the solenoid valve element 175 moves away from the second axial hole 186, the second axial hole 186 being thereby opened. By the second axial hole 186 being so opened, oil reserved in the oil chamber 74c is discharged into the oil pan 80 via the first radial hole 183, the second axial hole 186 and the second radial hole 184, and the second line oil path 75b and the pilot oil path 81 are cut off (hereinafter, the position of the solenoid valve element 175 shown in Fig. 8(b) will from time to time be referred to as a valve closing position).

Returning to Fig. 5, in the hydraulic circuit 71, the first oil path 76a and the second oil path 76b merge with each other at their downstream sides into a common oil path 76c which is common to both the oil paths. A relief valve 84 is connected to a merging portion, and when a line pressure in the common oil path 76c reaches or exceeds a predetermined pressure, this relief valve 84 allows oil within the common oil path 76c to be discharged into the oil pan 80 via a relief drain 86 to thereby reduce the oil pressure.

As shown in Fig. 6, the first oil path 76a and the second oil path 76b have orifices 85a, 85b which are formed therein as flow path resistance structures, and the orifice 85a in the first oil path 76a is made larger in diameter than the orifice 85b in the second oil path 76b. Consequently, a flow path resistance in the second oil path 76b is larger than a flow path resistance in the first oil path 76a, whereby a pressure reduction amount in the second oil path 76b while the electric oil pump 70 is operating in the high-pressure mode becomes larger than a pressure reduction amount in the first oil path 76a while the electric oil pump 70 is operating in the low-pressure mode, the oil pressure in the common oil path 76c being thereby substantially equal when in the high-pressure mode and the low-pressure mode.

In the oil path selector valve 73 that is connected to the first oil path 76a and the second oil path 76b in the way described above, with the electric oil pump 70 operating in the low-pressure mode, the biasing force of the spring 73b is superior in magnitude to the oil pressure in the oil chamber 73c, and the valve element 73a is positioned in the low-pressure side position by the biasing force of the spring 73b, whereby the line oil path 75 is cut off from the second oil path 76b and is then caused to communicate with the first oil path 76a. Oil flowing in the first oil path 76a reaches the lubricating and cooling portion 91 via the common oil path 76c while being subjected to the flow path resistance at the orifice 85a to thereby be reduced in pressure. On the other hand, while the electric oil pump 70 is operating in the high-pressure mode, the oil pressure within the oil chamber 73c is superior in magnitude to the biasing force of the spring 73b, and the valve element 73a is positioned in the high-pressure side position against the biasing force of the spring 73b, whereby the line oil path 75 is cut off from the first oil path 76a and is then caused to communicate with the second oil path 76b. Oil flowing in the second oil path 76b reaches the lubricating and cooling portion 91 via the common oil path 76c while being subjected to the flow path resistance that is larger than the flow path resistance at the orifice 85a at the orifice 85b to thereby be reduced in pressure.

Consequently, when the electric oil pump 70 is switched from the low-pressure mode to the high-pressure mode, the oil flow path is automatically switched from the oil path having the smaller flow path resistance to the oil path having the larger flow path resistance according to a change in oil pressure in the line oil path 75. Therefore, an excessive oil supply to the lubricating and cooling portion 91 is suppressed when in the high-pressure mode.

A plurality of orifices 85c are provided as other flow path resistance structures in oil paths that reach the lubricating and cooling portion 91 from the common oil path 76c. The plurality of orifices 85c are set so that a minimum flow path sectional area of the orifice 85a in the first oil path 76a is smaller than a minimum flow path sectional area of the plurality of orifices 85c. Namely, the flow path resistance of the orifice 85a of the first oil path 76a is set larger than a flow path resistance of the plurality of orifices 85c. In this case, the minimum flow path sectional area of the plurality of orifices 85c is a total sum of minimum flow path sectional areas of the respective orifices 85c. By adopting this configuration, it is possible to cause the oil to flow at a desired flow rate by adjusting the orifice 85a in the first oil path 76a and the orifice 85b in the second oil path 76b.

The control unit 8 (refer to Fig. 1) is a control unit for performing various controls in the whole vehicle. Vehicle speed, steering angle, accelerator pedal opening AP, gear position and SOC are inputted into the control unit 8, while outputted from the control unit 8 are a signal that controls the internal combustion engine 4, a signal that controls the motors 2A, 2B, signals indicating a generating state, charging state and discharging state of the battery 9, a control signal to be inputted into the solenoid 174 of the solenoid valve 83 and a control signal that controls the electric oil pump 70.

Namely, the control unit 8 includes at least a function as a motor controller for controlling the motors 2A, 2B and a function as a connection/disconnection unit controller for controlling the hydraulic brakes 60A, 60B as the connection/disconnection unit. When functioning as the connection/disconnection unit controller, the control unit 8 controls the electric oil pump 70 and the solenoid 174 of the solenoid valve 83 based on the driven state of the motors 2A, 2B and/or a driving command (a driving signal) given to the motors 2A, 2B. The electric oil pump 70 may be controlled based on a revolution speed control or a torque control, and the electric oil pump 70 is controlled based on target oil pressures in the first hydraulic chambers S1 and the second hydraulic chambers S2. Further, the electric oil pump 70 is preferably controlled based on actual oil pressures that are detected from the sensor 92 and target oil pressures of the first hydraulic chambers S1 and the second hydraulic chambers S2. Note that in place of the actual oil pressures that are given from the sensor 92, estimated oil pressures obtained by an oil pressure estimation unit may be used.

In this embodiment, a hydraulic path that establishes a communication between the electric oil pump 70 and the hydraulic brakes 60A, 60B is made up of the first line oil path 75a that is situated upstream of the oil path selector valve 73, the second line oil path 75b that is situated downstream of the oil path selector valve 73, and the brake oil path 77. Then, a fluid flow path that establishes a communication between the electric oil pump 70 and the lubricating and cooling portion 91 is made up of the first line oil path 75a that is situated upstream of the oil path selector valve 73, the first oil path 76a, the second oil path 76b, and the common oil path 76c. The oil path selector valve 73 is provided as a flow path selector valve that straddles between the hydraulic path and the fluid flow path.

Next, the operation of the hydraulic circuit 71 of the rear-wheel drive system 1 will be described.

Fig. 5 shows the hydraulic circuit 71 with the hydraulic brakes 60A, 60B kept released while the vehicle is stopped. In this state, the control unit 8 does not operate the electric oil pump 70. By so doing, the valve element 73a of the oil path selector valve 73 is positioned in the low-pressure side position, and the valve element 74a of the brake oil path selector valve 74 is positioned in the valve closing position, no oil pressure being thereby supplied to the hydraulic circuit 71.

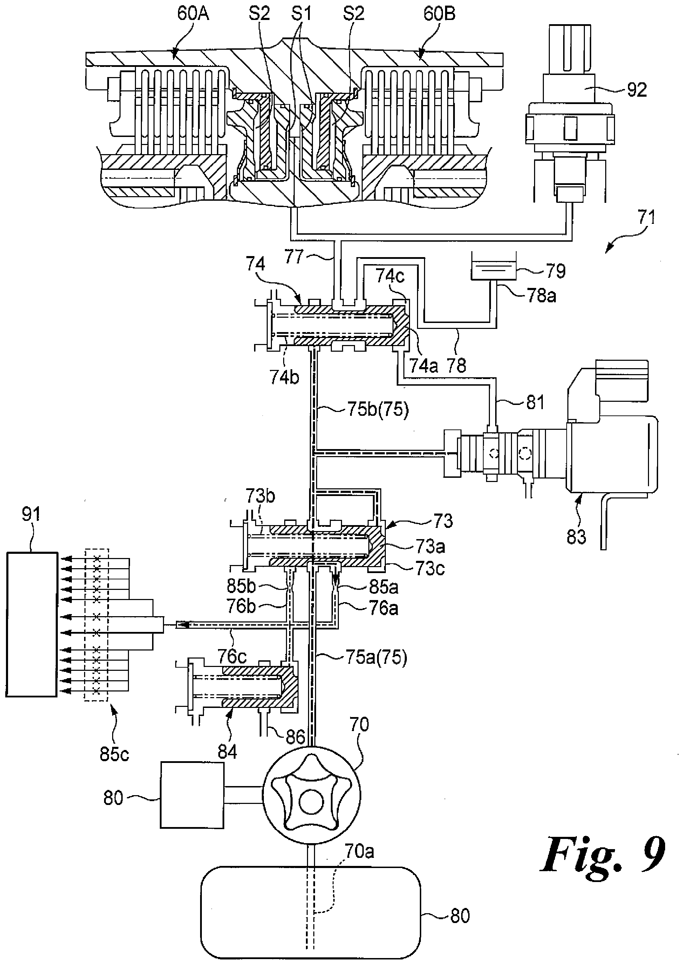

Fig. 9 shows a state in which the hydraulic brakes 60A, 60B are released while the vehicle is being driven. In this state, the control unit 8 operates the electric oil pump 70 in the low-pressure mode. Additionally, the control unit 8 energizes the solenoid 174 of the solenoid valve 83, whereby the second line oil path 75b and the pilot oil path 81 are cut off. By so doing, the valve element 74a of the brake oil path selector valve 74 is positioned in the valve closing position by the biasing force of the spring 74b, whereby the communication between the second line oil path 75b and the brake oil path 77 is cut off, while the brake oil path 77 is caused to communicate with the high-positioned drain 78, the hydraulic brakes 60A, 60B being thereby released. Thus, the brake oil path 77 is connected to the reservoir portion 79 via the high-positioned drain 78.

In the oil path selector valve 73, the biasing force of the spring 73b is larger than an oil pressure that is produced in the line oil path 75 while the electric oil pump 70 is operating in the low-pressure mode and which is inputted into the oil chamber 73c disposed at the right end of the selector valve 73 as shown in the figure. Therefore, the valve element 73a is positioned in the low-pressure side position, whereby the communication of the line oil path 75 with the second oil path 76b is cut off, and the line oil path 75 is caused to communicate with the first oil path 76a. By so doing, oil in the line oil path 75 is supplied to the lubricating and cooling portion 91 via the first oil path 76a while being reduced in pressure at the orifice 85a.

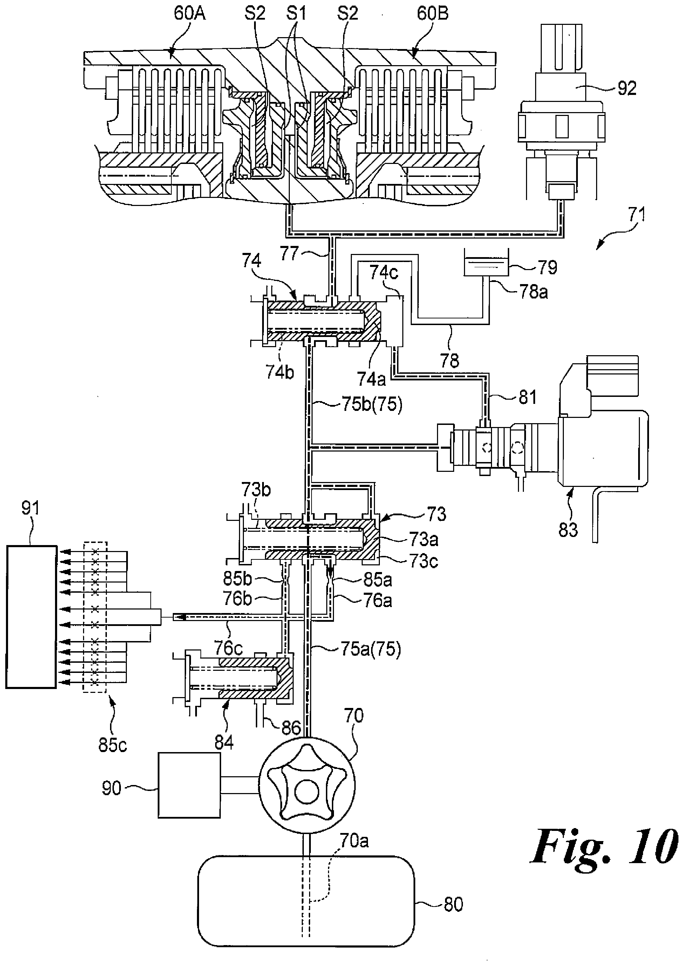

Fig. 10 shows the hydraulic circuit 71 with the hydraulic brakes 60A, 60B applied weakly. The weak application means a state in which the hydraulic brakes 60A, 60B are applied with an application force that is weaker than an application force with which the hydraulic brakes 60A, 60B are applied properly although the power transmission is enabled. As this occurs, the control unit 8 operates the electric oil pump 70 in the low-pressure mode. Additionally, the control unit 8 de-energizes the solenoid 174 of the solenoid valve 83 and causes the oil pressure in the second line oil path 75b to be inputted into the oil chamber 74c of the brake oil path selector valve 74. By so doing, the oil pressure within the oil chamber 74c becomes superior in magnitude to the biasing force of the spring 74b, whereby the valve element 74a is positioned in the valve opening position, and the communication between the brake oil path 77 and the high-positioned drain 78 is cut off, while the brake oil path 77 is caused to communicate with the second oil line 75b, the hydraulic brakes 60A, 60B being thereby applied weakly.

As this occurs, too, as with when the hydraulic brakes 60A, 60B are released, in the oil path selector valve 73, the biasing force of the spring 73b is larger than the oil pressure in the line oil path 75 that is produced while the electric oil pump 70 is operating in the low-pressure mode and which is inputted into the oil chamber 73c disposed at the right end of the selector valve 73 as seen in the figure. Therefore, the valve element 73a is positioned in the low-pressure side position, and the communication of the line oil path 75 with the second oil path 76b is cut off, while the line oil path 75 is caused to communicate with the first oil path 76a. By so doing, the oil in the line oil path 75 is supplied to the lubricating and cooling portion 91 via the first oil path 76a while being reduced in pressure at the orifice 85a.

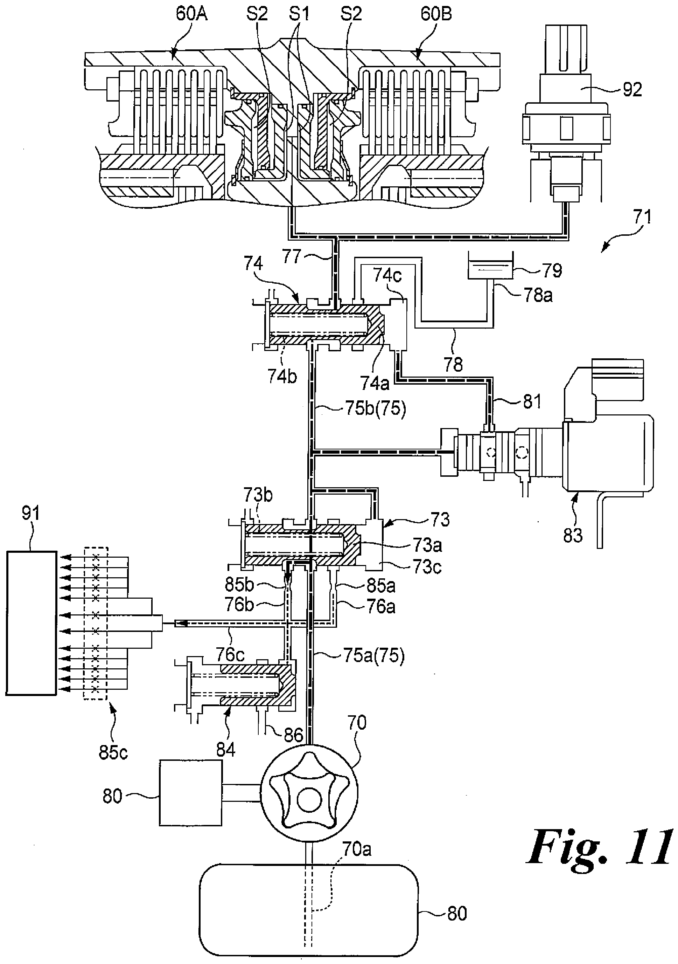

Fig. 11 shows the hydraulic circuit 71 with the hydraulic brakes 60A, 60B applied. As this occurs, the control unit 8 operates the electric oil pump 70 in the high-pressure mode. Additionally, the control unit 8 de-energizes the solenoid 174 of the solenoid valve 83 and causes the oil pressure in the second line oil path 75b to be inputted into the oil chamber 74c disposed at the right end of the brake oil path selector valve 74. By so doing, the oil pressure within the oil chamber 74c becomes superior in magnitude to the biasing force of the spring 74b, whereby the valve element 74a is positioned in the valve opening position, and the communication between the brake oil path 77 and the high-positioned drain 78 is cut off, while the brake oil path 77 is caused to communicate with the second oil line 75b, the hydraulic brakes 60A, 60B being thereby applied.

In the oil path selector valve 73, the oil pressure in the line oil path 75 that is produced while the electric oil pump 70 is operating in the high-pressure mode and which is inputted into the oil chamber 73c disposed at the right end of the selector valve 73 as seen in the figure is larger than the biasing force of the spring 73b. Therefore, the valve element 73a is positioned in the high-pressure side position, and the communication of the line oil path 75 with the first oil path 76a is cut off, while the line oil path 75 is caused to communicate with the second oil path 76b. By so doing, the oil in the line oil path 75 is supplied to the lubricating and cooling portion 91 via the second oil path 76b while being reduced in pressure at the orifice 85b.

In this way, by controlling the operation mode (the operating state) of the electric oil pump 70 and the opening or closing of the solenoid valve 83, the control unit 8 releases or applies the hydraulic brakes 60A, 60B so as not only to put the motors 2A, 2B and the wheels Wr in a disconnected state or a connected state in a switching fashion but also to control the application force of the hydraulic brakes 60A, 60B.

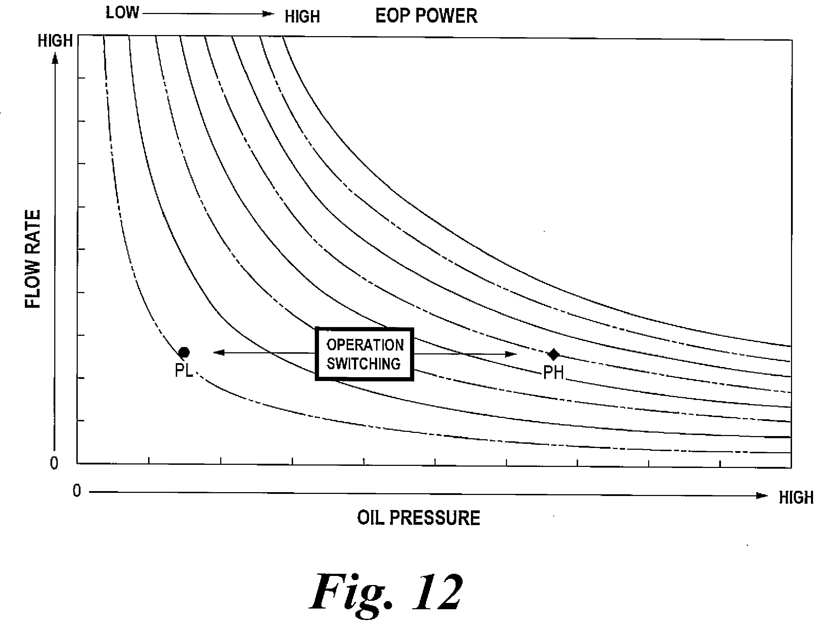

Fig. 12 is a graph showing load characteristics of the electric oil pump 70.

As shown in Fig. 12, compared with the high-pressure mode (with an oil pressure PH), in the low-pressure mode (with an oil pressure PL), the power of the electric oil pump 70 can be decreased to on the order of 1/4 to 1/5, while maintaining the flow rate of supplied oil. Namely, the load of the electric oil pump 70 is small in the low-pressure mode, and the consumed power of the motor 90 that drives the electric oil pump 70 can be reduced compared with the high-pressure mode.

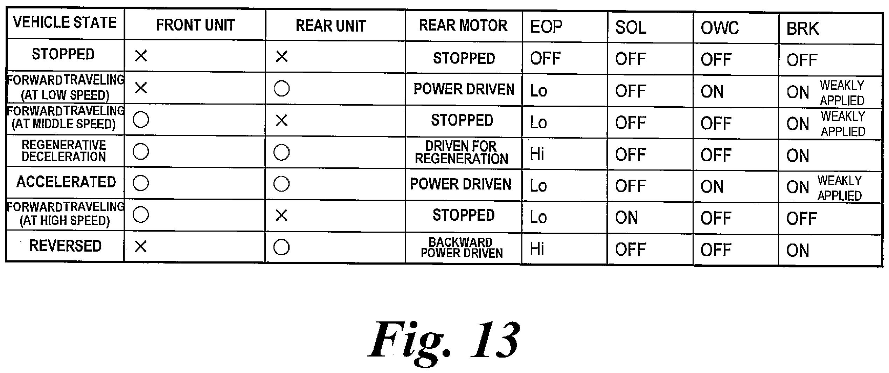

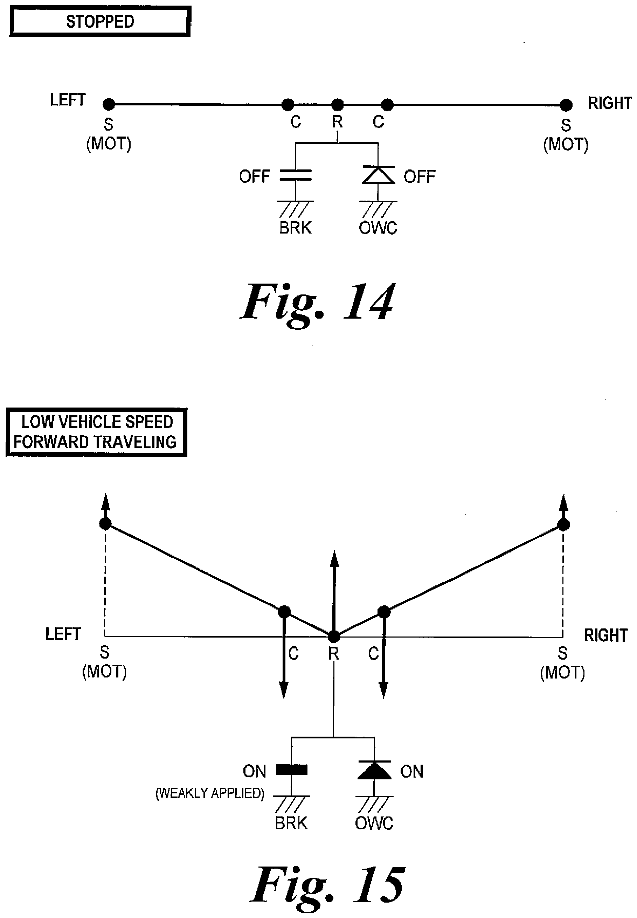

Fig. 13 is a table depicting a relation between the front-wheel drive system 6 and the rear-wheel drive system 1 in various vehicle states together with operating states of the motors 2A, 2B and states of the hydraulic circuit 71. In the figure, a front unit denotes the front-wheel drive system 6 and a rear unit denotes the rear-wheel drive system 1. Rear motors denote the motors 2A, 2B. EOP denotes the electric oil pump 70 and SOL denotes the solenoid 174. OWC denotes the one-way clutch 50, and BRK denotes the hydraulic brakes 60A, 60B. Figs. 14 to 19 denote speed collinear diagrams of the rear-wheel drive system 1 in the various states. In each of the figures, S and C on a left-hand side denote the sun gear 21A of the epicyclic reduction gear 12A coupled to the motor 2A and the planetary carrier 23A coupled to the axle 10A, respectively. S and C on a right-hand side denote the sun gear 21B of the epicyclic reduction gear 12B coupled to the motor 2B and the planetary carrier 23B coupled to the axle 10B, respectively. R denotes the ring gears 24A, 24B, BRK denotes the hydraulic brakes 60A, 60B and OWC denotes the one-way clutch 50. In the following description, the rotating direction of the sun gears 21A, 21B that are rotated by the motors 2A, 2B when the vehicle travels forwards is referred to as a forward direction. In the figures, a portion above a line denoting a state in which the vehicle is stopped denotes a forward rotation, whereas a portion below the line denotes a backward rotation. Arrows directed upwards denote forward torque, whereas arrows directed downwards denote backward torque.

While the vehicle is stopped, neither the front-wheel drive system 6 nor the rear-wheel drive system 1 is driven. Consequently, as shown in Fig. 14, the motors 2A, 2B of the rear-wheel drive system 1 are stopped, and the axles 10A, 10B are also stopped. Therefore, no torque acts on any of the elements. In the state in which the vehicle is stopped, in the hydraulic circuit 71, as shown in Fig. 5, the electric oil pump 70 is not operating, and the solenoid 174 of the solenoid valve 83 is de-energized. However, since no oil pressure is supplied, the hydraulic brakes 60A, 60B are released (OFF). Additionally, since the motors 2A, 2B are not driven, the one-way clutch 50 is not engaged (OFF).

Then, while the vehicle is traveling forwards at low vehicle speeds by EV start and EV cruise with good motor efficiency after the ignition is switched on, the vehicle is driven through rear-wheel drive by the rear-wheel drive system 1. As shown in Fig. 15, when the motors 2A, 2B are power driven so as to rotate in the forward direction, forward torque is applied to the sun gears 21A, 21B. As this occurs, as has been described before, the one-way clutch 50 is engaged, and the ring gears 24A, 24B are locked. By so doing, the planetary carriers 23A, 23B rotate in the forward direction, whereby the vehicle is allowed to travel forwards. Note that a running resistance from the axles 10A, 10B act on the planetary carries 23A, 23B in the backward direction. In this way, when the vehicle is started, the ignition is switched on and the torque of the motors 2A, 2B is increased, whereby the one-way clutch 50 is engaged mechanically, and the ring gears 24A, 24B are locked.

As this occurs, in the hydraulic circuit 71, as shown in Fig. 10, the electric oil pump 70 operates in the low-pressure mode (Lo), and the solenoid 174 of the solenoid valve 83 is de-energized, the hydraulic brakes 60A, 60B being thereby put in a weakly applied state. In this way, when forward rotational power at the motors 2A, 2B is inputted into the wheels Wr, the one-way clutch 50 is put in an engaged state, and the power transmission is enabled only by the one-way clutch 50. However, by keeping the hydraulic brakes 60A, 60B in the weakly applied state and also keeping the motors 2A, 2B and the wheels Wr in the connected state, even when the input of the forward rotational power from the motors 2A, 2B is temporarily decreased, thereby putting the one-way clutch 50 in a disengaged state, it is possible to restrain the power transmission between the motors 2A, 2B and the wheels Wr from being interrupted. Additionally, a revolution speed control is made unnecessary that would otherwise have to be carried out to put the motors 2A, 2B and the wheels Wr in the connected state when the vehicle is shifted to a regenerative deceleration, which will be described later. This application force of the hydraulic brakes 60A, 60B is weaker than an application force applied when the vehicle is shifted to the regenerative deceleration or when the vehicle is reversed. On the other hand, the consumed power that is consumed when the hydraulic brakes 60A, 60B are applied is reduced by making the application force of the hydraulic brakes 60A, 60B when the one-way clutch 50 is in the engaged state weaker than the application force of the hydraulic brakes 60A, 60B when the one-way clutch 50 is in the disengaged state. Further, in this state, as has been described above, the oil in the oil path 75 is supplied to the lubricating and cooling portion 91 via the first oil path 76a while being reduced in pressure at the orifice 85a, lubrication and cooling being thereby implemented by the lubricating and cooling portion 91.

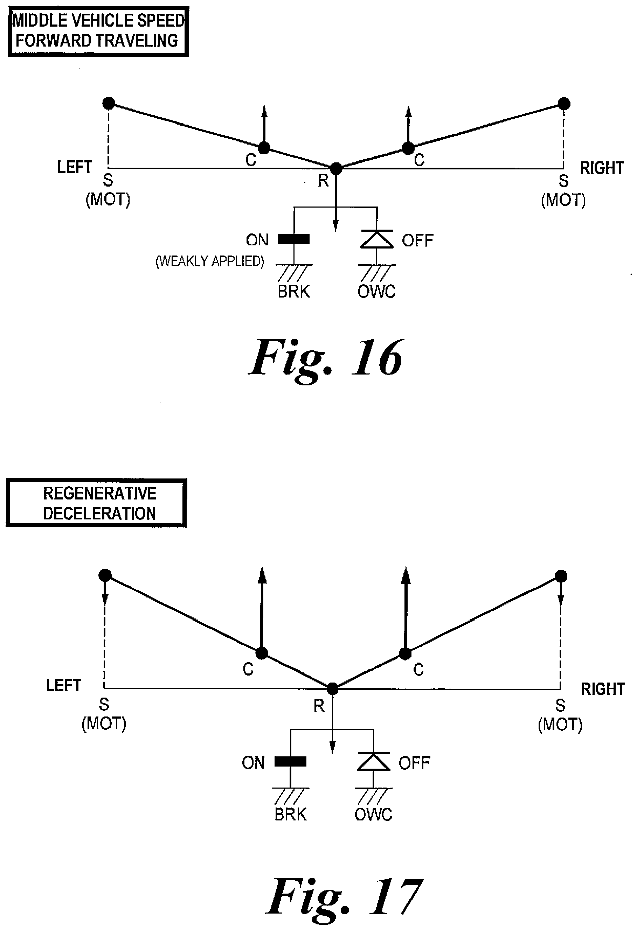

When the vehicle speed is increased from the state in which the vehicle is traveling forwards at low vehicle speeds, causing the vehicle to travel forwards at middle vehicle speeds, the driving of the vehicle is shifted from the rear-wheel drive by the rear-wheel drive system 1 to the front-wheel drive by the front-wheel drive system 6. As shown in Fig. 16, when the power driving of the motors 2A, 2B is stopped, forward torque attempting to drive the vehicle forwards is applied to the planetary carriers 23A, 23B from the axles 10A, 10B, and therefore, as has been described above, the one-way clutch 50 is put in the disengaged state.

As this occurs, in the hydraulic circuit 71, as shown in Fig. 10, the electric oil pump 70 operates in the low-pressure mode (Lo), and the solenoid 174 of the solenoid valve 83 is de-energized (OFF). Additionally, the hydraulic brakes 60A, 60B are in the weakly applied state. In this way, when the forward rotational power at the wheels Wr is inputted in the motors 2A, 2B, the one-way clutch 50 is in the disengaged state, and it is not possible to transmit the power only by the one-way clutch 50. However, by causing the hydraulic brakes 60A, 60B that are provided in parallel with the one-way clutch 50 to be applied weakly and keeping the motors 2A, 2B and the wheels Wr in the connected state, a power transmissive state can be maintained between the motors 2A, 2B and the wheels Wr, whereby a revolution speed control becomes unnecessary when the vehicle is shifted to the regenerative deceleration. Note that this application force of the hydraulic brakes 60A, 60B is also weaker than the application force applied when the vehicle is shifted to the regenerative deceleration or when the vehicle is reversed. In this state, as has been described above, the oil in the line oil path 75 is supplied to the lubricating and cooling portion 91 via the first oil path 76a while being reduced in pressure at the orifice 85a, lubrication and cooling being thereby implemented by the lubricating and cooling portion 91.

When the motors 2A, 2B are attempted to be driven for regeneration from the state depicted in Fig. 15, as shown in Fig. 17, the forward torque attempting to keep the vehicle traveling forwards is applied to the planetary carriers 23A, 23B from the axels 10A, 10B. Therefore, as has been described before, the one-way clutch 50 is put in the disengaged state.

As this occurs, in the hydraulic circuit 71, as shown in Fig. 11, the electric oil pump 70 operates in the high-pressure mode (Hi), and the solenoid 174 of the solenoid valve 83 is de-energized (OFF). Additionally, the hydraulic brakes 60A, 60B are put in the applied state (ON). Consequently, the ring gears 24A, 24B are fixed, and backward regenerative braking torque is applied to the motors 2A, 2B, whereby a regenerative deceleration is executed by the motors 2A, 2B. In this way, when the forward rotational power at the wheels Wr is inputted into the motors 2A, 2B, the one-way clutch 50 is put in the disengage state, and it is not possible to transmit the power only by the one-way clutch 50. However, by causing the hydraulic brakes 60A, 60B that are provided in parallel with the one-way clutch 50 to be applied and keeping the motors 2A, 2B and the wheels Wr in the connected state, a power transmissive state can be maintained between the motors 2A, 2B and the wheels Wr. Then, by controlling the motors 2A, 2B to be put in a regenerative drive state in this state, the energy of the vehicle can be regenerated. In this state, as has been described above, the oil in the line oil path 75 is supplied to the lubricating and cooling portion 91 via the second oil path 76b while being reduced in pressure at the orifice 85b, lubrication and cooling being thereby implemented by the lubrication and cooling portion 91.

Following this, when the vehicle is accelerated, the vehicle is driven through four-wheel drive involving the front-wheel drive system 6 and the rear-wheel drive system 1. Then, the rear-wheel drive system 1 is in the same state as the state depicted in Fig. 15 that results when the vehicle is traveling forwards at low vehicle speeds, and the hydraulic circuit 71 is also put in the state shown in Fig. 10.

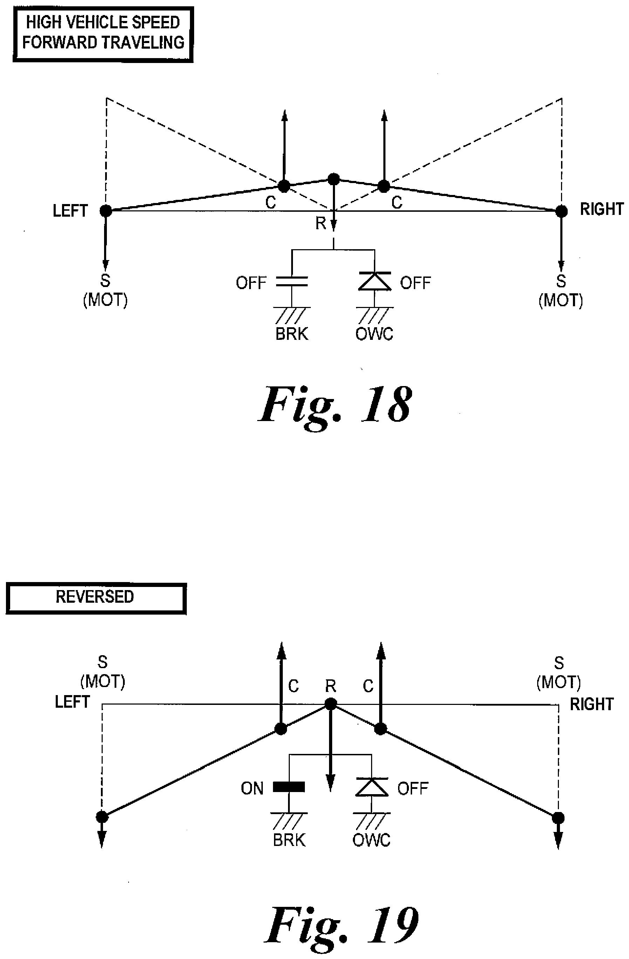

When the vehicle travels forwards at high vehicle speeds, the vehicle is driven through front-wheel drive by the front-wheel drive system 6. As shown in Fig. 18, when the motors 2A, 2B are stopped being power driven, the forward torque attempting to cause the vehicle to travel forwards is applied to the planetary carriers 23A, 23B from the axles 10A, 10B. Therefore, as has been described before, the one-way clutch 50 is put in the disengaged state.

As this occurs, in the hydraulic circuit 71, as shown in Fig. 9, the electric oil pump 70 operates in the low-pressure mode (Lo), the solenoid 174 of the solenoid valve 83 is energized (ON), and the hydraulic brakes 60A, 60B are put in a released state (OFF). Consequently, the entrained rotation of the motors 2A, 2B is prevented, and the overspeed of the motors 2A, 2B is prevented when the vehicle travels forwards at high vehicle speeds by the front-wheel drive system 6. In this state, as has been described above, the oil in the line oil path 75 is supplied to the lubricating and cooling portion 91 via the first oil path 76a while being reduced in pressure at the orifice 85a, lubrication and cooling being thereby implemented by the lubricating and cooling portion 91.

When the vehicle is reversed, as shown in Fig. 19, in the event that the motors 2A, 2B are power driven backwards, backward torque is given to the sun gears 21A, 21B. As this occurs, the one-way clutch 50 is put in the disengaged state as has been described before.

As this occurs, in the hydraulic circuit 71, as shown in Fig. 11, the electric oil pump 70 operates in the high-pressure mode (Hi), the solenoid 174 of the solenoid valve 83 is de-energized (OFF), and the hydraulic brakes 60A, 60B are put in the applied state. Consequently, the ring gears 24A, 24B are fixed, and the planetary carriers 23A, 23B are rotated backwards, whereby the vehicle is reversed. Note that the running resistance is applied in the forward direction to the planetary carriers 23A, 23B from the axles 10A, 10B. In this way, when the backward rotational power at the motors 2A, 2B is inputted into the wheels Wr, the one-way clutch 50 is put in the disengaged state, and it is not possible to transmit the power only by the one-way clutch 50. However, by causing the hydraulic brakes 60A, 60B that are provided in parallel with the one-way clutch 50 to be applied and keeping the motors 2A, 2B and the wheels Wr in the connected state, a power transmissive state can be maintained between the motors 2A, 2B and the wheels Wr, whereby the vehicle can be reversed by the rotational power of the motors 2A, 2B. In this state, as has been described above, the oil in the line oil path 75 is supplied to the lubricating and cooling portion 91 via the second oil path 76b while being reduced in pressure at the orifice 85b, lubrication and cooling being thereby implemented by the lubricating and cooling portion 91.

In this way, in the rear-wheel drive system 1, the application and release of the hydraulic motors 60A, 60B is controlled according to the driving states of the vehicle, in other words, according to in which direction the motors 2A, 2B rotate; in the forward or backward direction and from which the power is inputted; from the motors 2A, 2B or the wheels Wr. Further, even when the hydraulic brakes 60A, 60B are in the applied state, the application force is adjusted.

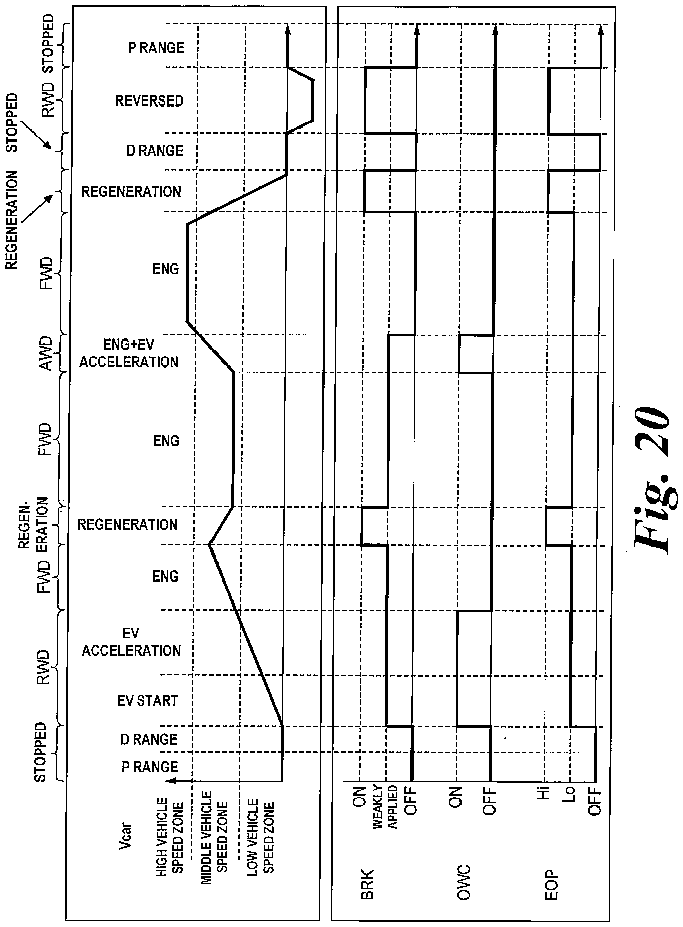

Fig. 20 is a timing chart of the electric oil pump 70 (EOP), the one-way clutch 50 (OWC), and the hydraulic brakes 60A, 60B (BRK) from the time when the vehicle starts from a stopped state to the time when the vehicle stops again through events of EV start → EV acceleration → engine acceleration → regenerative deceleration → middle-speed cruising → high-speed cruising → regenerative deceleration → stop → reversing.

Firstly, the electric oil pump 70 is kept de-energized (OFF), the one-way clutch 50 is kept in the disengaged state (OFF) and the hydraulic brakes 60A, 60B are kept in the released state (OFF) until the ignition is switched on and the gear is then shifted from the P range to the D range. When the accelerator pedal is depressed in that state, EV start and EV acceleration are executed through rear-wheel drive (RWD) by the rear-wheel drive system 1. As this occurs, the electric oil pump 70 operates in the low-pressure mode (Lo), the one-way clutch 50 is engaged (ON), and the hydraulic brakes 60A, 60B are put in the weakly applied state. Then, when the vehicle speed is increased to reach a middle vehicle speed zone from a low vehicle speed zone and the driving of the vehicle is switched from rear wheel drive to front wheel drive, an ENG driving (FWD) by the internal combustion engine 4 is executed. As this occurs, the one-way clutch 50 is disengaged (OFF), while the electric oil pump 70 and the hydraulic brakes 60A, 60B are kept in the same states as before. Then, when a regenerative deceleration occurs in the vehicle with the brake pedal depressed, for example, the electric oil pump 70 operates in the high-pressure mode (Hi) and the hydraulic brakes 60A, 60B are applied (ON) while the one-way clutch 50 is kept disengaged (OFF). The same state as when the ENG driving is executed results while the middle speed cruising by the internal combustion engine 4 is executed. Following this, when the accelerator pedal is depressed further to switch the driving of the vehicle from front wheel drive to four or all wheel drive (AWD), the one-way clutch 50 is engaged (ON) again. Then, when the vehicle speed reaches a high vehicle speed zone from the middle vehicle speed zone, the ENG driving (FWD) by the internal combustion engine 4 is executed again. As this occurs, the one-way clutch 50 is disengaged (OFF), and the hydraulic brakes 60A, 60B are released (OFF) while the electric oil pump 70 is kept operating in the low-pressure mode (Lo). Then, when a regenerative deceleration occurs in the vehicle again, the same state results as when the regenerative deceleration occurred in the vehicle as described above. Then, when the vehicle stops, the electric oil pump 70 stops its operation (OFF), the one-way clutch 50 is disengaged (OFF), and the hydraulic brakes 60A, 60B are put in the released state (OFF).

Following this, when the vehicle is reversed, the electric oil pump 70 operates in the high-pressure mode (Hi) and the hydraulic brakes 60A, 60B are applied (ON) while the one-way clutch 50 is kept disengaged (OFF). Then, when the vehicle stops, the electric oil pump 70 stops again its operation (OFF), the one-way clutch 50 is disengaged (OFF), and the hydraulic brakes 60A, 60B are put in the released state (OFF).

In this way, by holding the hydraulic brakes 60A, 60B in the weakly applied state when the vehicle travels forwards at low vehicle speeds or middle vehicle speeds, even when a drive torque reduction is generated temporarily in the motors 2A, 2B, it is possible to restrain the power transmission between the motors 2A, 2B and the wheels Wr from being interrupted. Additionally, by keeping the hydraulic brakes 60A, 60B in the weakly applied state to hold the power transmissive state between the wheels Wr and the motors 2A, 2B, a revolution speed control is made unnecessary as when the motors 2A, 2B are shifted to the regenerative drive state.

When the vehicle is traveling forwards at high vehicle speeds, the overspeed of the motors 2A, 2B is prevented by releasing the hydraulic brakes 60A, 60B. Additionally, when the vehicle is traveling forwards at high vehicle speeds, the temperature of oil in the hydraulic circuit 71 is so high that the hydraulic brakes 60A, 60B can be applied quickly.

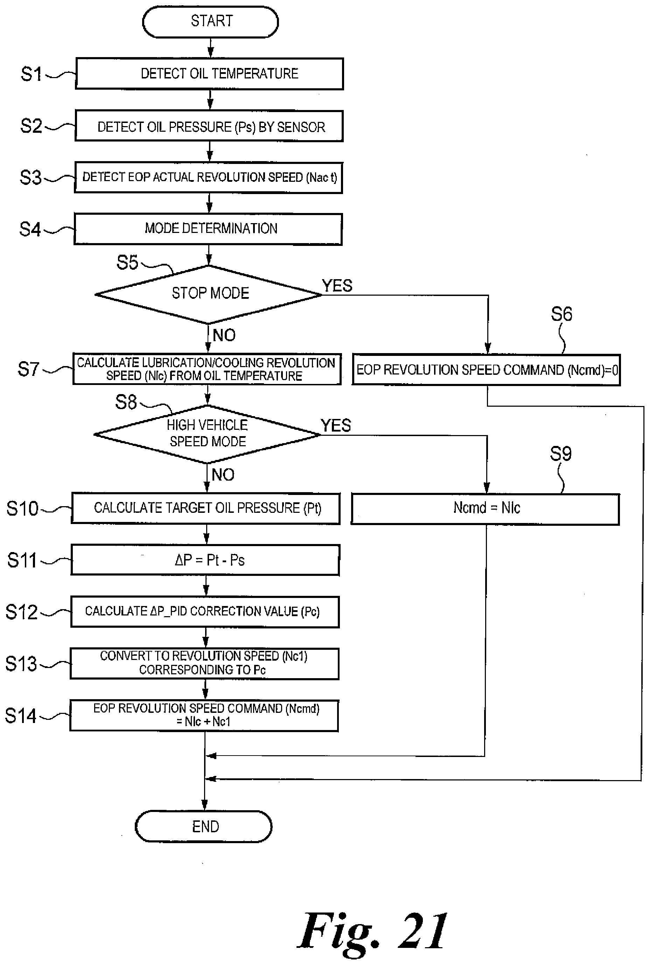

Following this, the control of the electric oil pump 70 will be described by reference to Fig. 21.

Firstly, the temperature of oil in the hydraulic circuit 71 is detected by an oil temperature sensor, not shown (step S1), and following this, the oil pressure (Ps) in the hydraulic circuit 71 is detected by the sensor 92 (step S2). Next, an EOP actual revolution speed (Nact) that is an actual revolution speed of the electric oil pump 70 is detected (step S3) to thereby execute a mode determination (step S4). Modes to be selected are made to correspond to the vehicle states depicted in Fig. 13 and are classified into a stop mode that corresponds to the state in which the vehicle is stopped and in which the hydraulic brakes 60A, 60B are released, a low vehicle speed and acceleration mode that corresponds to the states in which the vehicle travels at low vehicle speeds, the vehicle travels at middle vehicle speeds and the vehicle is accelerated and in which the hydraulic brakes 60A, 60B are applied weakly, a high vehicle speed mode that corresponds to the state in which the vehicle travels at high vehicle speeds and in which the hydraulic brakes 60A, 60B are released, a regeneration mode that corresponds to the regenerative deceleration and in which the hydraulic brakes 60A, 60B are applied, and a reverse mode that corresponds to the state in which the vehicle is reversed and in which the hydraulic brakes 60A, 60B are applied.

In the mode determination, whether or not the vehicle is in the stop mode is determined (step S5). If it is determined as a result of the determination that the vehicle is in the stop mode, a revolution speed command value (Ncmd) for the electric oil pump 70 is set to be zero in order to stop the electric oil pump 70 (step S6). On the contrary, if it is determined as a result of the determination that the vehicle is in any of the modes other than the stop mode, a revolution speed (NIc) of the electric oil pump 70 is calculated which is necessary to supply a predetermined amount of oil to the lubricating and cooling portion 91 according to the oil temperature (step S7).

Following this, it is determined whether or not the vehicle is in the high vehicle speed mode (step S8). If it is determined as a result of the determination that the vehicle is in the high vehicle speed mode, in order to release the hydraulic brakes 60A, 60B, the revolution speed command value (Ncmd) of the electric oil pump 70 is set to a revolution speed (NIc) of the electric oil pump 70 that is necessary to supply a predetermined oil to the lubricating and cooling portion 91 (step S9). By so doing, a target oil pressure becomes zero from a low oil pressure (PL) resulting when the state of the hydraulic brakes 60A, 60B is shifted from the applied state to the released state and a PID correction value becomes negative, whereby it is avoided that the revolution speed of the electric oil pump 70 becomes lower than the revolution speed (NIc) of the electric oil pump 70 that is necessary to supply the predetermined amount of oil to the lubricating and cooling portion 91.

If it is determined as a result of the determination in step S8 that the vehicle is not in the high vehicle speed mode, a target oil pressure (Pt) is calculated (step S10). Namely, if the vehicle is in the low vehicle speed and acceleration mode, a predetermined low oil pressure (an oil pressure PL resulting when the vehicle operates in the low-pressure mode) is calculated at which the hydraulic brakes 60A, 60B are put in the weakly applied state. Additionally, if the vehicle is in the regeneration mode or the reverse mode, a predetermined high oil pressure (an oil pressure PH resulting when the vehicle operates in the high-pressure mode) is calculated at which the hydraulic brakes 60A, 60B are put in the applied state.

Next, a differential pressure (ΔP) that results from subtracting the oil pressure (Ps) in the hydraulic circuit 71 that is detected by the sensor 92 from the calculated target oil pressure (Pt) is calculated (step S11), and a PID correction value (Pc) that is a PID correction value for the differential pressure (ΔP) is calculated (step S12). Then, a revolution speed (Nc1) of the electric oil pump 70 that corresponds to the PID correction value (Pc) is calculated based on a conversion relationship that is obtained in advance (step S13). Then, a value resulting from adding the revolution speed (Nc1) of the electric oil pump 70 that corresponds to the PID correction value (Pc) to the revolution speed (NIc) of the electric oil pump 70 that is necessary to supply the predetermined amount of oil to the lubricating and cooling portion 91 is set to the command value (Ncmd) of the revolution speed of the electric oil pump 70 (step S14). In this way, by adding the revolution speed (NIc) of the electric oil pump 70 that is necessary to supply the predetermined amount of oil to the lubricating and cooling portion 91, the deterioration in response due to a delay in feedback communication is suppressed.

As has been described heretofore, according to the embodiment, the flow path resistance of the fluid flow path that establishes the communication between the electric oil pump 70 and the lubricating and cooling portion 91 differs between when the valve element 73a of the oil path selector valve 73 is in the low-pressure side position and when the valve element 73a is in the high-pressure side position. Therefore, it is possible to adjust appropriately the flow rate of oil supplied to the lubricating and cooling portion 91 and the fluid pressure imparted to the hydraulic brakes 60A, 60B in the respective operating positions.

Additionally, the flow path resistance of the fluid flow path becomes larger when the valve element 73a of the oil path selector valve 73 is in the high-pressure side position than when the valve element 73a is in the low-pressure side position. Therefore, it is possible to suppress the oversupply of oil to the lubricating and cooling portion 91. In addition, the oil pressure imparted to the hydraulic brakes 60A, 60B can be increased as required.

According to the embodiment, since the fluid flow path has the first oil path 76a and the second oil path 76b which are disposed parallel to each other, it is possible to adjust the flow path resistance easily.

The communication is established in the second oil path 76b whose flow path resistance to the lubricating and cooling portion 91 is larger when the valve element 73a of the oil path selector valve 73 is in the high-pressure side position. Therefore, it is possible to suppress the oversupply of oil to the lubricating and cooling portion 91. In addition, the oil pressure imparted to the hydraulic brakes 60A, 60B can be increased as required.

According to the embodiment, the oil path selector valve 73 puts the second oil path 76b in the cut-off state when the valve element 73a is in the low-pressure side position and puts the first oil path 76a in the cut-off state when the valve element 73a is in the high-pressure side position. Therefore, only one of the oil paths is put in the cut-off state, thereby making it possible to adjust the flow path resistance accurately.

In addition, the flow path resistances of the first oil path 76a and the second oil path 76b are adjusted by the orifices 85a, 85b which function as the flow path resistance structures, thereby making it possible to ease the adjustment of the flow path resistances. In the embodiment, while the orifices 85a, 85b are described as functioning as the flow path resistance structures, the invention is not limited thereto, and hence, venturis or grid-like mesh structures may be used. Further, in place of providing the flow path resistance structures, the first flow path 76a and the second flow path 76b may be formed so that a flow path sectional area of the second oil path 76b is smaller than a flow path sectional area of the first oil path 76a. Alternatively, the first oil path 76a and the second oil path 76b may be formed so that a flow path length of the second oil path 76b that extends from the flow path selector valve 73 to the lubricating and cooling portion 91 becomes longer than a flow path length of the first oil path 76a that extends from the flow path selector valve 73 to the lubricating and cooling portion 91. By so doing, it is possible to adjust finely the flow path resistances, thereby making it possible to adjust finely the respective flow rates of the oil paths.

According to the embodiment, the first oil path 76a and the second oil path 76b merge into the common oil path 76c at the downstream ends thereof. Therefore, the low-pressure oil paths are made to stay parallel to each other at upstream ends thereof which face the oil path selector valve 73, thereby making it possible to have the different flow path resistances, while the low-pressure oil paths are formed into the common oil path at the downstream ends there, thereby making it possible to simplify the hydraulic circuit 71.

According to the embodiment, since at least part of the hydraulic path is formed within the oil path selector valve 73, it is possible not only to simplify the oil path but also to save space therefor.

According to the embodiment, the other orifices 85c are provided downstream of the orifice 85a of the first oil path 76a and the orifice 85b of the second oil path 76b and upstream of the lubricating and cooling portion 91, and the flow path resistance of the orifice 85a of the first oil path 76a is larger than that of the orifices 85c. Therefore, it is possible to adjust the flow rate of the first oil path 76a or the second oil path 76b. Note that as with the orifices 85a, 85b, flow path resistance structures such as venturis or grid-like mesh structures may be provided in place of the orifices 85c.

According to the embodiment, the reservoir portion 79 is disposed in the higher position than the oil pan 80 where the oil inlet port 70a of the electric oil pump 70 is disposed in the vertical direction. Therefore, when the valve element 74a is shifted from the valve opening position to the valve closing position so as to release the hydraulic brakes 60A, 60B, the oil in the hydraulic brakes 60A, 60B is not discharged directly into the oil pan 80 but is discharged into the reservoir portion 79 that is disposed in the higher position than the oil pan 80 in the vertical direction by way of the high-positioned drain 78 to thereby be reserved therein. Consequently, when the valve element 74a is shifted from the valve-closing position to the valve-opening position again to thereby apply the hydraulic brakes 60A, 60B, the oil pressure is allowed to be restored quickly.

According to the embodiment, the reservoir portion 79 is disposed so that the vertically highest portion of the reservoir portion 79 becomes vertically higher than a middle point between the vertically highest portions and the vertically lowest portions of the first hydraulic chambers S1 of the hydraulic brakes 60A, 60B. The first hydraulic chambers S1 of the hydraulic brakes 60A, 60B are places where a hydraulic pressure is produced and hence have high fluid tightness, and therefore, even in such a state that the hydraulic brakes 60A, 60B are caused to communicate with the high-positioned drain 78, oil is difficult to be discharged into the reservoir portion 79. However, by setting the vertically highest portion of the reservoir portion 79 in the higher position than the middle point of the first hydraulic chambers S1, the amount of oil that is discharged into the reservoir portion 79 can be reduced further. Consequently, a certain amount of oil is allowed to remain in the hydraulic brakes 60A, 60B, and this enables a quick application of the hydraulic brakes 60A, 60B.

According to the embodiment, the reservoir portion side end portion 78a of the high-positioned drain 78 is connected to the bottom surface of the reservoir portion 79. Therefore, even when the amount of oil in the reservoir portion 79 is reduced, it is possible to suppress the mixing of air into the interior of the high-positioned drain 78.

According to the embodiment, in the solenoid valve 83, when the solenoid 174 is supplied with no electric power (de-energized), the solenoid valve element 175 is positioned in the valve opening position so that the communication is established between the oil chamber 74c and the electric oil pump 70, while when the solenoid 174 is supplied with electric power (energized), the solenoid valve element 174 is positioned in the valve closing position so that the communication is cut off between the oil chamber 74c and the electric oil pump 70. Therefore, it is possible to adjust the supply of oil pressure to the oil chamber 74c or the oil pressure therein without involving electric power consumption at the solenoid valve element 175, thereby making it possible to adjust the supply of oil pressure to the hydraulic brakes 60A, 60B or the oil pressure therein accordingly. In particular, when the release time of the hydraulic brakes 60A, 60B is longer than the application time thereof, the amount of consumed electric power can be reduced. In addition, when electric power is supplied, the oil path can be cut off momentarily.

### <Second Embodiment>

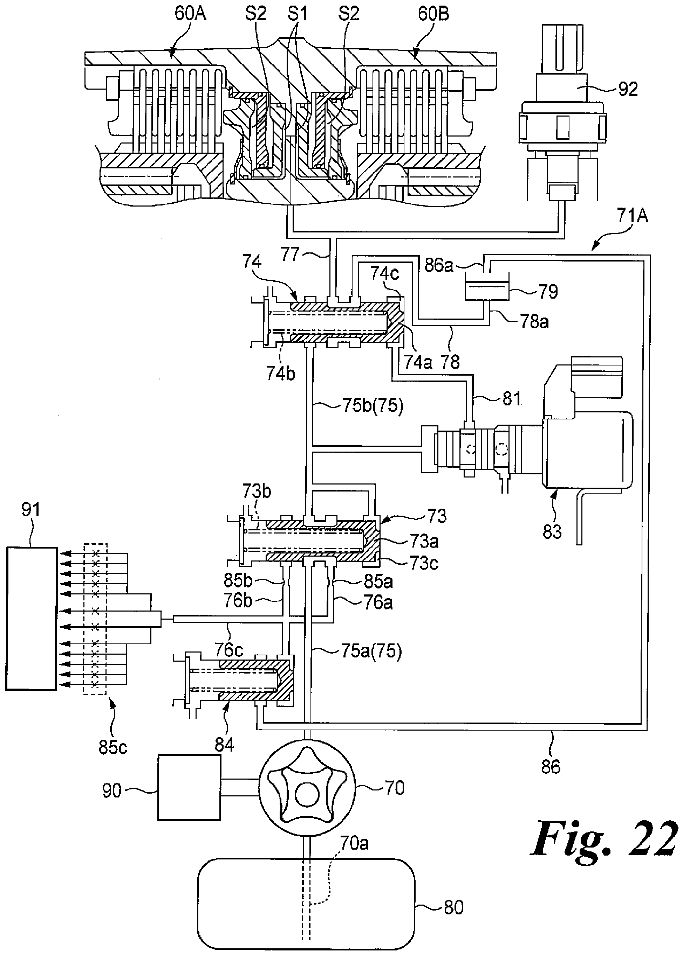

Next, a second embodiment of the invention will be described by reference to Fig. 22. Note that the second to sixth embodiments that will be described below are such that the configuration of the hydraulic circuit of the first embodiment is partially altered. Therefore, like reference numerals will be given to like members to those of the first embodiment, and the description thereof will be omitted.

A hydraulic circuit 71A of the second embodiment differs from the hydraulic circuit 71 of the first embodiment in that a relief drain 86 of a relief valve 84 is connected not to an oil pan 80 where an oil inlet port 70a of an electric oil pump 70 is disposed but to a reservoir portion 79 that is placed in a higher position than the oil pan 80. A reservoir portion side end portion 86a of the relief drain 86 is disposed in a higher position than a vertically highest portion of the reservoir portion 79.

By adopting this configuration, in addition to the function of the hydraulic circuit 71 of the first embodiment, it is possible to refrain a fluid level in the reservoir portion 79 from being lowered by supplying oil from the relief drain 86 into the reservoir portion 79, thereby making it possible to hold oil levels in the oil chambers of the hydraulic brakes 60A, 60B in a higher position with no oil pressure supplied to the hydraulic brakes 60A, 60B. When a supply amount of oil supplied from the relief drain 86 is larger than a discharge amount of oil discharged from the brake oil path selector valve 74, the oil levels in the oil chambers of the hydraulic brakes 60A, 60B can be held at almost the same oil level that would result when the oil pressure is supplied to the hydraulic brakes 60A, 60B. In addition, since the oil reservoir portion side end portion 86a of the relief drain 86 is disposed in the higher position than the vertically highest portion of the reservoir portion 79, it is possible to suppress the reverse flow of oil from the reservoir portion 79 by way of the relief drain 86.

### <Third Embodiment>

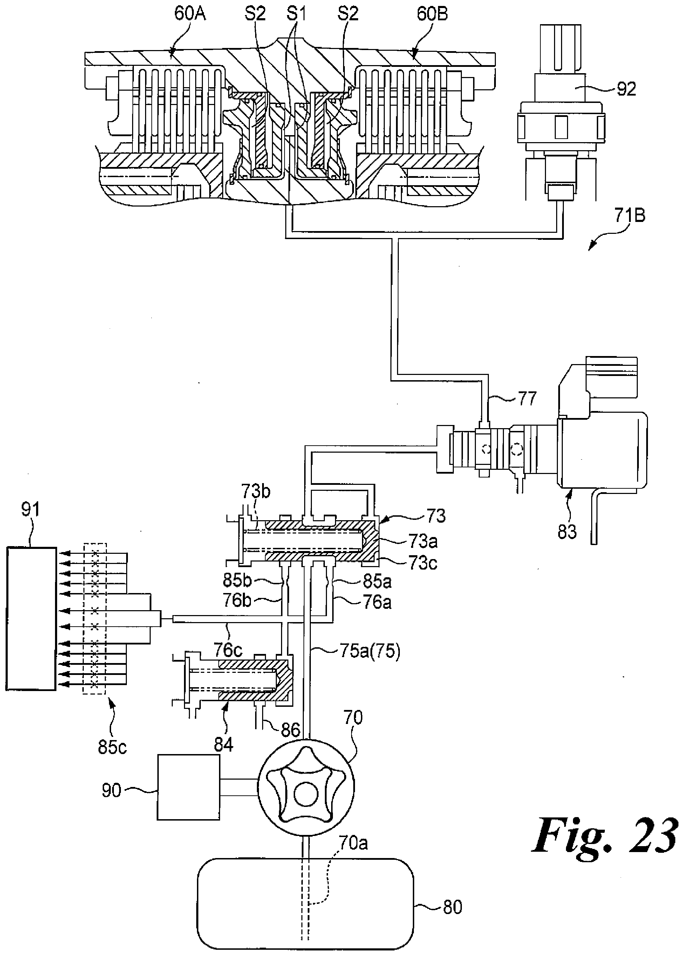

Next, a third embodiment of the invention will be described by reference to Fig. 23.

A hydraulic circuit 71B of the third embodiment differs from the hydraulic circuit 71 of the first embodiment in that the brake oil path selector valve 74 of the first embodiment is not provided and a brake oil path 77 is connected directly to a first radial hole 183 (refer to Fig. 8) of a solenoid valve 83.

In this hydraulic circuit 71B, by controlling operation modes of an electric oil pump 70 and the energization or de-energization of a solenoid 174 in the same way as done in the hydraulic circuit 71 of the first embodiment, it is possible to control hydraulic brakes 60A, 60B to be put in a released state, a weakly applied state and an applied state, thereby making it possible to lubricate or cool a normally lubricating and cooling portion 91. Since the brake oil path selector valve 74 is not provided, although oil in a brake oil path 77 tends to be lost easily when a communication in the brake oil path 77 is cut off, the number of components involved can instead be reduced, thereby making it possible to simplify the construction.

### <Fourth Embodiment>

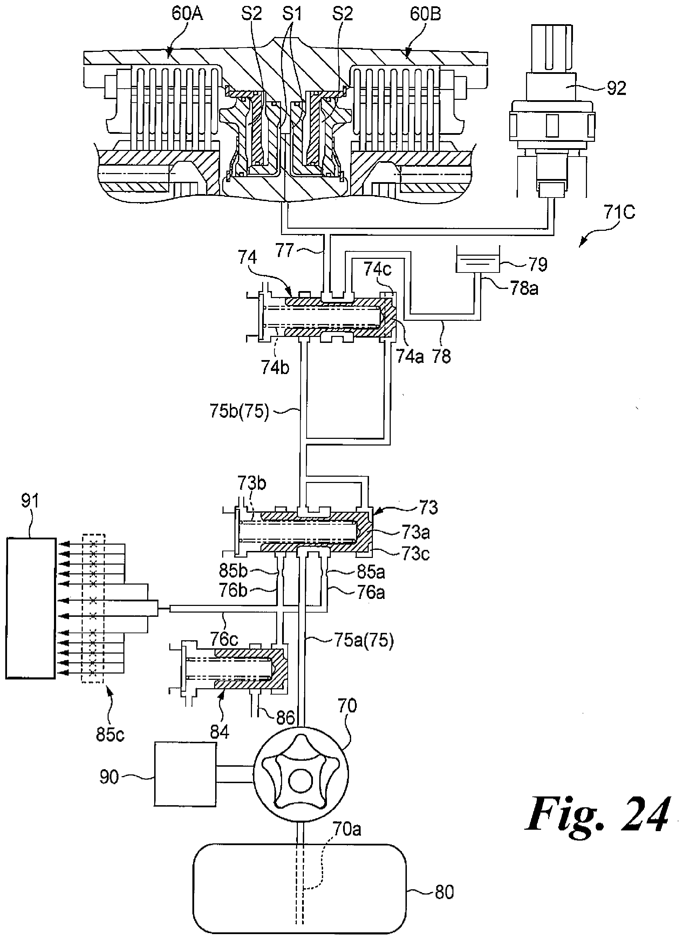

Next, a fourth embodiment of the invention will be described by reference to Fig. 24.

A hydraulic circuit 71C of the fourth embodiment differs from the hydraulic circuit 71 of the first embodiment in that the solenoid valve 83 of the first embodiment is not provided and an oil chamber 74c of a brake oil path selector valve 74 is connected directly to a second line oil path 75b which makes up a line oil path 75.

In this hydraulic circuit 71C, an electric oil pump 70 can be operated in three modes such as a high-pressure mode, a low-pressure mode and an extremely low-pressure mode. The biasing force of a spring 73b of an oil path selector valve 73 is set so that a valve element 73a is not moved and a line oil path 75 is cut off from a second oil path 76b and is then caused to communicate with a first oil path 76a under an oil pressure in the line oil path 75 that is inputted into an oil chamber 73c while the electric oil pump 70 is operating in the low-pressure mode and the extremely low-pressure mode. The biasing force of the spring 73b is set so that the valve element 73a is moved and the line oil path 75 is cut off from the first oil path 76a and is then caused to communicate with the second oil path 76b under an oil pressure in the line oil path 75 that is inputted into the oil chamber 73c while the electric oil pump 70 is operating in the high-pressure mode. A biasing force of a spring 74b of the brake oil path selector valve 74 is set so that a valve element 74a is not moved and the second line oil path 75b is cut off from a brake oil path 77 under an oil pressure in the line oil path 75 that is inputted into the oil chamber 74c while the electric oil pump 70 is operating in the extremely low-pressure mode. The biasing force of the spring 74b is set so that the valve element 74a is moved and the second line oil path 75b is caused to communicate with the brake oil path 77 under an oil pressure in the line oil path 75 that is inputted into the oil chamber 74c while the electric oil pump 70 is operating in the low-pressure mode and the high-pressure mode.

Then, in order for the hydraulic brakes 60A, 60B to be put in a weakly applied state, the electric oil pump 70 is operated in the low-pressure mode. In order for the hydraulic brakes 60A, 60B to be put in a released state, the electric oil pump 70 is operated in an extremely low-pressure mode. In order for the hydraulic brakes 60A, 60B to be put in an applied state, the electric oil pump 70 is operated in a high-pressure mode. Thus, a similar function to that of the first embodiment can be obtained. In the hydraulic circuit 71C of this embodiment, the electric oil pump 70 needs to be controlled in three stages, but the solenoid valve 83 can instead be omitted, whereby the number of components involved can be reduced, thereby making it possible to simplify the construction.

### <Fifth Embodiment>

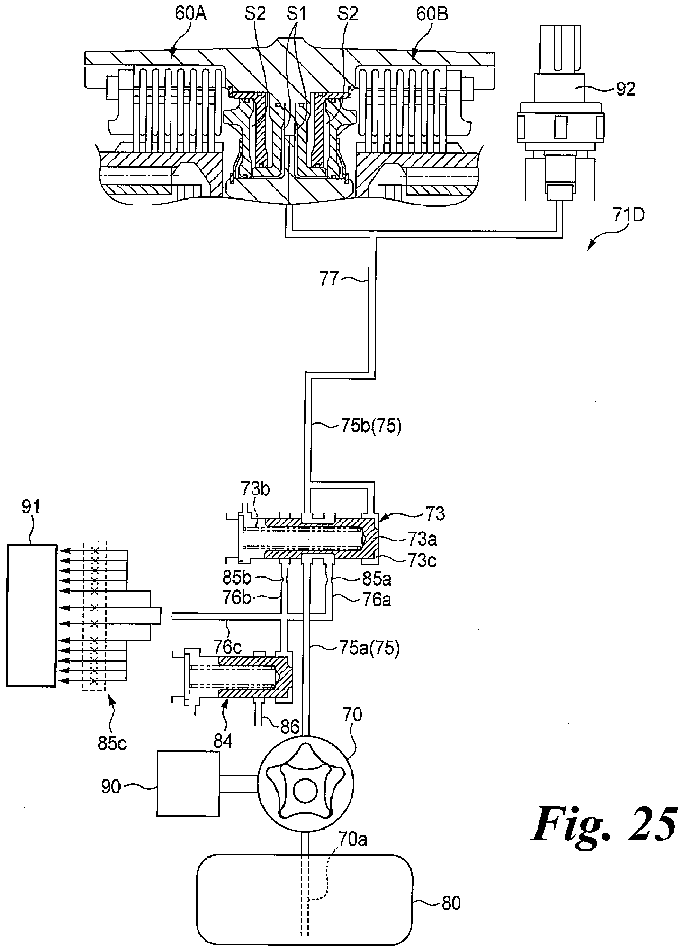

Next, a fifth embodiment of the invention will be described by reference to Fig. 25.

A hydraulic circuit 71D of the fifth embodiment differs from the hydraulic circuit 71 of the first embodiment in that the brake oil path selector valve 74 and the solenoid valve 83 of the first embodiment are not provided and a brake oil path 77 is connected directly a second line oil path 75b that makes up a line oil path 75.

In this hydraulic circuit 71D, hydraulic brakes 60A, 60B are held in a weakly applied state while an electric oil pump 70 is operating in a low-pressure mode and the hydraulic brakes 60A, 60B are held in an applied state while the electric oil pump 70 is operating in a high-pressure mode. Therefore, in the hydraulic circuit 71D, although the hydraulic brakes 60A, 60B cannot be held in a released state, the other similar functions to those of the hydraulic circuit 71 of the first embodiment can be attained. The reason that the hydraulic brakes 60A, 60B are put in the released state is that the overspeed of motors 2A, 2B that would otherwise occur when the vehicle is driven at high vehicle speeds is prevented as described with respect to Fig. 13. Hence, the overspeed of the motors 2A, 2B can be dealt with by changing a reduction ratio of reduction gears so that the revolution speed of the motors 2A, 2B is reduced to a lower revolution speed or increasing the permissible revolution speed of the motors 2A, 2B. According to this embodiment, the number of components involved can be reduced to thereby simplify the construction by omitting the brake oil path selector valve 74 and the solenoid valve 83.

According to this embodiment, since the electric oil pump 70 is caused to communicate with the hydraulic brakes 60A, 60B without involvement of the operation of a valve element 73a of an oil path selector valve 73, fluid can be supplied to the hydraulic brakes 60A, 60B in a stable fashion.

### <Sixth Embodiment>

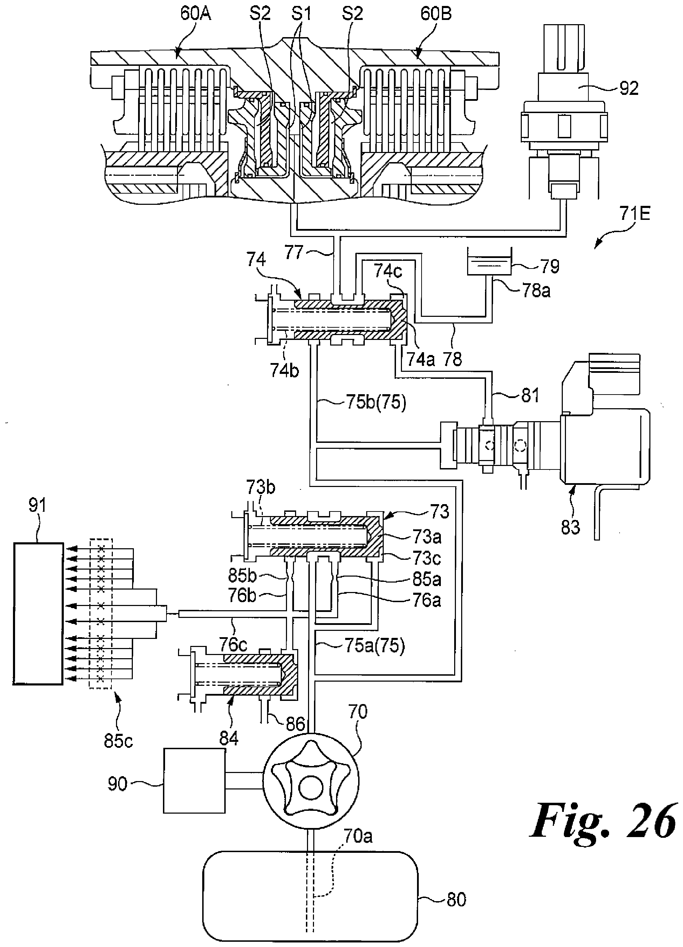

Next, a sixth embodiment of the invention will be described by reference to Fig. 26.

A hydraulic circuit 71E of the sixth embodiment differs from the hydraulic circuit 71 of the first embodiment in that a first line oil path 75a and a second line oil path 75b that make up the line oil path 75 of the first embodiment are connected to each other without involvement of an oil path selector valve 73 therebetween.

In this hydraulic circuit 71E, two branch paths are formed in positions along the length of the first line oil path 75a before the first line oil path 75a reaches the oil path selector valve 73. One branch path is connected to the second line oil path 75b without involvement of the oil path selector valve 73 therebetween, and the other branch path is connected to an oil chamber 73c. In this hydraulic circuit 71E, too, by controlling operation modes of an electric oil pump 70 and the energization and de-energization of a solenoid 174 in a similar way to the way adopted in the hydraulic circuit 71 of the first embodiment, hydraulic brakes 60A, 60B can be controlled to be put in a released state, a weakly applied state and an applied state in the same way as done in the hydraulic circuit 71 of the first embodiment, thereby making it possible to lubricate and cool a normally lubricating and cooling portion 91.

### <Seventh Embodiment>

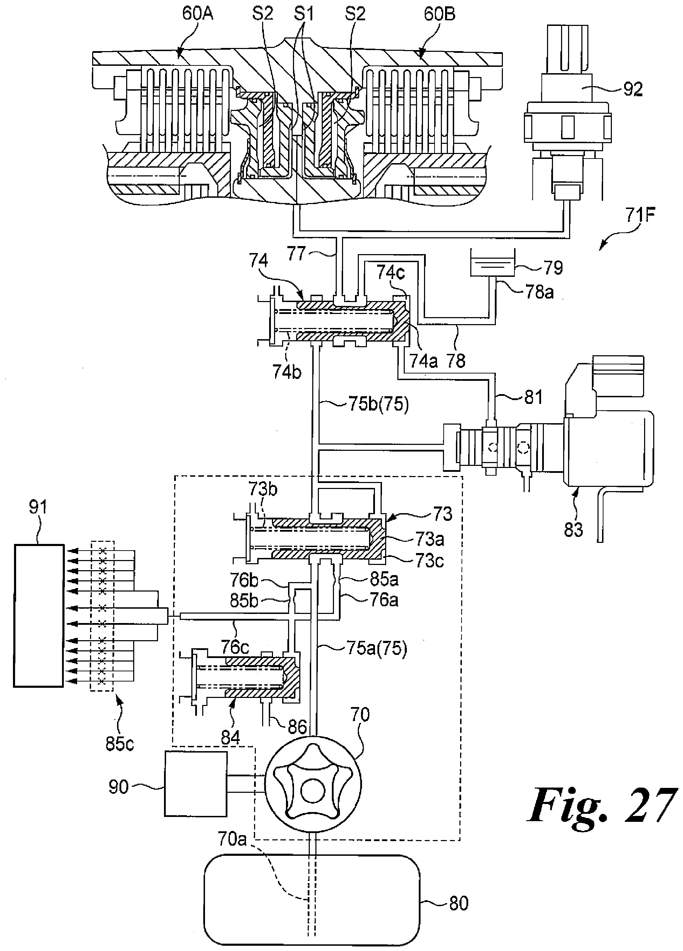

Next, a seventh embodiment of the invention will be described by reference to Fig. 27. A hydraulic circuit 71F of the seventh embodiment differs from the hydraulic circuit 71 of the first embodiment in that a second oil path 76b like the second oil path 76b of the first embodiment is connected to a first line oil path 75a that makes up a line oil path 75 without involvement of an oil path selector valve 73 therebetween.

In this hydraulic circuit 71F, when an electric oil pump 70 is operating in a low-pressure mode, a biasing force of a spring 73b is superior in magnitude to an oil pressure in an oil chamber 73c, whereby a valve element 73a is positioned in a low-pressure side position by virtue of the biasing force of the spring 73b, thereby causing the line oil path 75 to communicate with a first oil path 76a. Oil that flows in the first oil path 76a is subjected to a flow path resistance at an orifice 85a so as to be reduced in pressure, and oil that flows in the second oil path 76b is subjected to the flow path resistance at the orifice 85a so as to merge with the oil from the first oil path 76a in a common oil path 76c to reach a lubricating and cooling portion 91. On the other hand, when the electric oil pump 70 is operating in a high-pressure mode, the oil pressure in the oil chamber 73c is superior in magnitude to the biasing force of the spring 73b, whereby the valve element 73a is positioned in a high-pressure side position against the biasing force of the spring 73b, thereby the line oil path 75 being cut off from the first oil path 76a. Oil that flows in the second oil path 76b is subjected to a flow path resistance at an orifice 85b to thereby be reduced in pressure and then reaches the lubricating and cooling portion 91 by way of the common oil path 76c.

Consequently, when the operation mode of the electric oil pump 70 is switched from the low-pressure mode to the high-pressure mode, the number of oil paths reaching the lubricating and cooling portion 91 is automatically reduced in accordance with a change in oil pressure in the line oil path 75 so as to increase the flow path resistance. Therefore, the oversupply of oil to the lubricating and cooling portion 91 when in the high-pressure mode is suppressed. The flow rate of the second oil path 76b can be ensured in a stable fashion without involvement of the operation of the valve element 73a. In this embodiment, the flow path resistance is adjusted by the number of oil paths leading to the lubricating and cooling portion 91, and therefore, either of the orifice 85a of the first oil path 76a and the orifice 85b of the second oil path 76b may be larger in diameter.

Thus, as has been described heretofore, according to this embodiment, the oil path selector valve 73 establishes the communication between the first oil path 76a and the second oil path 76b when the valve element 73a is in the low-pressure side position, while when the valve element 73a is in the high-pressure side position, the valve element 73a cuts off the communication in the first oil path 76a. Therefore, by reducing the number of oil paths to the lubricating and cooling portion 91, the flow path resistance can be increased.

The second oil path 76b communicates with the electric oil pump 70 and the lubricating and cooling portion 91 without involvement of the oil path selector valve 73 therebetween, and therefore, the flow rate of the second oil path 76b can be ensured in a stable fashion without involvement of the operation of the valve element 73a.

According to this embodiment, since the first oil path 76a and the second oil path 76b have different flow path resistances, the flow rate of oil that is supplied to the lubricating and cooling portion 91 when the valve element 73a of the oil path selector valve 73 is in the low-pressure side position and in the high-pressure side position can be adjusted finely.

In addition, the adjustment of the flow path resistance is eased by adjusting the flow path resistance by the orifices 85a, 85b.

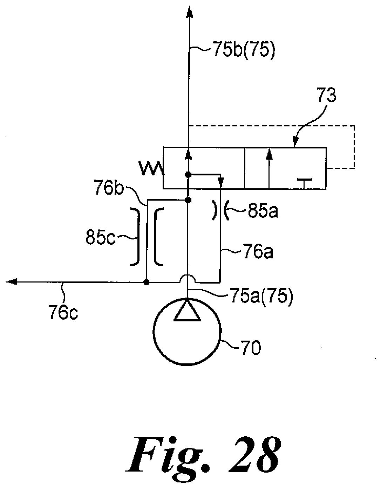

Hereinafter, as modified examples of the seventh embodiment, modified examples will be described in which only the configuration of a portion surrounded by dotted lines in Fig. 27 is modified. In Figs. 28 to 30, although circuit symbols are used to simplify the illustration, like reference numerals are given to like configurations to those of the seventh embodiment shown in Fig. 27, and the description thereof will be omitted.

### <First Modified Example>

In a first modified example, as shown in Fig. 28, a choke 85c is provided in a second oil path 76b in place of an orifice 85b. Oil that flows in the second oil path 76b is subjected to a flow resistance at the choke 85c to thereby be reduced in pressure and then reaches a lubricating and cooling portion 91 by way of a common oil path 76c. Being different from the orifice 85a, in the choke 85c, the oil path resistance is in inverse proportion to a product of oil viscosity coefficient and length. The viscosity of oil has temperature characteristics, and therefore, the viscosity coefficient increases when the oil temperature is low, increasing the flow path resistance. Because of this, when the oil temperature is low, oil has difficulty in flowing to the lubricating and cooling portion 91, and an accordingly increased amount of oil flows to hydraulic brakes 60A, 60B by way of a line oil path 75, thereby making it possible to raise the fluid pressures in the hydraulic brakes 60A, 60B quickly. Further, even after the communication in the first oil path 76a is cut off, the fluid pressures in the hydraulic brakes 60A, 60B so raised can be held long. Note that in this choke 85c, the viscosity coefficient becomes small when the oil temperature is high, and the flow path resistance then exhibits almost the same characteristics as those of the orifice.

### <Second Modified Example>

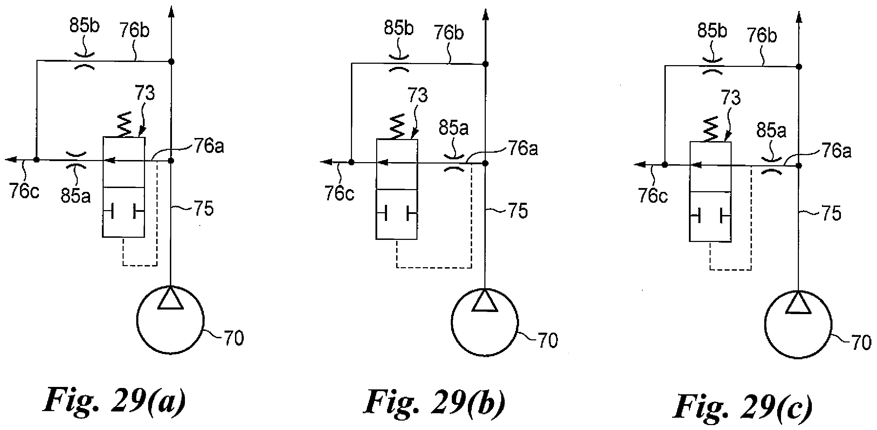

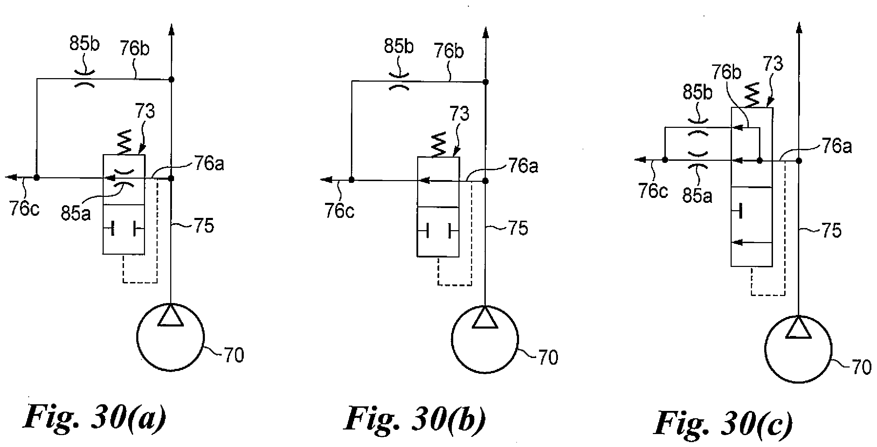

In a second modified example, as shown in Figs. 29 and 30, an oil path selector valve 73 is provided on a fluid flow path that establishes a communication between an electric oil pump 70 and a lubricating and cooling portion 91, and the second modified example differs from the hydraulic circuit 71F of the seventh embodiment in that the oil path selector valve 73 does not straddle between the fluid flow path and a hydraulic path that establishes a communication between the electric oil pump 70 and hydraulic brakes 60A, 60B.

In a hydraulic circuit shown in Fig. 29(a), a first oil path 76a that communicates with the lubricating and cooling portion 91 and a second oil path 76b that communicates with the lubricating and cooling path 91 branch off from a line oil path 75, and the oil path selector valve 73 is provided on the first oil path 76a. An orifice 85a is formed downstream of the oil path selector valve 73 in the first oil path 76a, and an orifice 85b is also formed in the second oil path 76b.

In this hydraulic circuit, when the electric oil pump 70 is operating in a low-pressure mode, the oil path selector valve 73 communicates with the first oil path 76a. Oil that flows in the first oil path 76a is subjected a flow path resistance at the orifice 85a to thereby be reduced in pressure, and oil that flows in the second oil path 76b is subjected to a flow path resistance at the orifice 85b to thereby be reduced in pressure. Then, the oil reduced in pressure from the first oil flow 76a and the oil reduced in pressure from the second oil path 76b merge with each other in a common oil path 76c, reaching the lubricating and cooling portion 91. On the other hand, when the electric oil pump 70 is operating in a high-pressure mode, the oil path selector valve 73 puts the first oil path 76a in a cut-off state. Oil that flows in the second oil path 76b is subjected to a flow path resistance at the orifice 85b to thereby be reduced in pressure and reaches the lubricating and cooling portion 91 by way of the common oil path 76c.

Consequently, when the operation mode of the electric oil pump 70 is switched from the low-pressure mode to the high-pressure mode, the number of oil paths reaching the lubricating and cooling portion 91 is automatically reduced in accordance with a change in oil pressure in the line oil path 75 to thereby increase the flow path resistance. Therefore, the oversupply of oil to the lubricating and cooling portion 91 when in the high-pressure mode can be suppressed. Additionally, the flow rate of the second oil path 76b can be ensured in a stable fashion without involvement of the operation of a valve element 73a. Note that in this embodiment, since the flow path resistance is adjusted based on the number of oil paths reaching the lubricating and cooling portion 91, either of the orifice 85a of the first oil path 76a and the orifice 85b of the second oil path 76b may be larger in diameter or both the orifices 85a, 85b may be identical in diameter.

As shown in Figs. 29(b) and 29(c), the orifice 85a may be formed upstream of the oil path selector valve 73 in the first oil path 76a. Fig. 29(b) shows a configuration in which the orifice 85a is formed downstream of a branch path that branches off from the first oil path 76a so as to communicate with an oil chamber 73c. Fig. 29(c) shows a configuration in which the orifice 85a is formed upstream of the branch path that branches off from the first oil path 76a so as to communicate with the oil chamber 73c. By forming the orifice 85a upstream of the branch path as shown in Fig. 29(c), a pressure that is inputted into the oil chamber 73c can be made smaller by such an extent that the pressure of oil in the first oil path 76a is reduced at the orifice 85a.

As shown in Fig. 30(a), the orifice 85a may be formed in an interior of the oil path selector valve 73. The formation of the orifice 85a is eased by forming the orifice 85a in the interior of the oil path selector valve 73.

As shown in Fig. 30(b), an orifice may be formed in either of the first flow path 76a and the second flow path 76b, and a flow path resistance in the other of the first and second flow paths 76(a), 76(b) may be adjusted by adjusting a sectional area of the flow path itself. In Fig. 30(b), the orifice 85b is formed only in the second oil path 76b, and no orifice is provided in the first oil path 76a with a sectional area of the oil flow path itself adjusted. By so doing, it is possible to simplify the construction of the hydraulic circuit.

As shown in Fig. 30(c), the first oil path 76a and the second oil path 76b may be made to branch off from each other in the interior of the oil path selector valve 73, and the orifices 85a, 85b may both be formed downstream of the oil path selector valve 73. By so doing, the first oil path 76a and the second oil path 76b can be disposed near to each other.

Note that the invention is not limited to the embodiments that have been described heretofore and hence can be modified or improved as required.

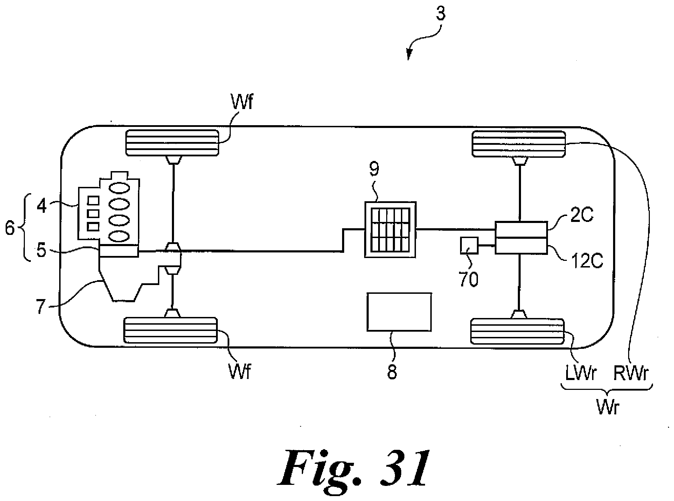

For example, in the rear-wheel drive systems 1 of the embodiments, the epicyclic reduction gears 12A, 12B are provided for the two motors 2A, 2B, respectively, so as to control the left rear wheel LWr and the right rear wheel RWr, respectively. However, the invention is not limited thereto, and hence, a configuration may be adopted in which as shown in Fig. 31, one motor 2C and one reduction gear 12C may be connected to a differential gear, not shown.

The front-wheel drive system 6 may be configured so that the motor 5 is provided as a single drive source without using the internal combustion engine 4.

In each valve mechanism, the cut-off state involves not only the form where the flow path is closed completely but also the form where the flow path is constricted relative to the communicating state, provided that the function and advantage of the invention are attained.

While oil is described as being the fluid that is used for cooling and lubrication, the invention is not limited thereto, and hence other forms of fluid may be used.

While the spring 73b is described as being the restoration member, the invention is not limited thereto, and hence, the restoration member may be made up of a fluid chamber or an electromagnetic valve.

### Description of Reference Numerals and Characters

- 1: Rear-wheel drive system (Vehicle drive system)
- 2A, 2B, 2C: Motor
- 10A, 10B: Axle
- 12A, 12B: Epicyclic reduction gear
- 50: One-way clutch
- 60A, 60B: Hydraulic brake (Hydraulic connection/disconnection unit)
- 70: Electric oil pump (Hydraulic pressure supply source)
- 71, 71A to 71F: Hydraulic circuit (Hydraulic pressure control unit)
- 73: oil path selector valve (flow path selector valve)
- 73a: Valve element
- 73b: Spring (Restoration member)
- 73c: Oil chamber (Hydraulic chamber)
- 74: Brake oil path selector valve
- 75: Line oil path
- 75a: First line oil path
- 75b: Second line oil path
- 76a: First oil path (First fluid flow path)
- 76b: Second oil path (Second fluid flow path)
- 77: Brake oil path
- 85a, 85b: Orifice (Flow path resistance structure, Diametrically constricted portion)
- 85c: Choke (Flow path resistance structure, Diametrically constricted portion)
- 91: Lubricating and cooling portion (Fluid supplied portion)
- LWr: Left rear wheel (Wheel)
- RWr: Right rear wheel (Wheel)
- S1: First hydraulic chamber (Oil chamber)

## Claims

1. A fluid flow path control unit (71E) for a vehicle drive system (1), the vehicle drive system (1) including:
a motor (2A, 2B, 2C) configured to generate driving force to drive a vehicle (3);
a hydraulic connection/disconnection unit (60A, 60B) that is provided on a power transmission line defined between the motor (2A, 2B, 2C) and a wheel (LWr, RWr), the hydraulic connection/disconnection unit (60A, 60B) configured to connect and disconnect the transmission of power therebetween; and
a fluid supplied portion (91) that is at least one of the motor (2A, 2B, 2C) and the power transmission line and to which fluid that is used for cooling or lubrication is supplied,
the fluid flow path control unit (71E) including:
a fluid supply unit (70) configured to supply fluid to the hydraulic connection/disconnection unit (60A, 60B) through a hydraulic path (75a, 75b, 77) and to the fluid supplied portion (91) through a fluid flow path (75a, 76a, 76b, 76c); and
a flow path selector valve (73) that is disposed on the fluid flow path (75a, 76a, 76b, 76c), wherein the flow path selector valve (73) includes
a valve element (73a) that is switchable between a first operating position and a second operating position, wherein the fluid flow path (75a, 76a, 76b, 76c) has a flow path resistance which differs between when the valve element (73a) is in the first operating position and when the valve element (73a) is in the second operating position,
a restoration member (73b) configured to bias the valve element (73a) from the second operating position toward the first operating position and
a fluid chamber (73c) configured to accommodate fluid for biasing the valve element from the first operating position toward the second operating position, and
**characterized in that** the fluid chamber (73c) communicates with the fluid supply unit (70) when the valve element (73a) is in the first and second operating positions, and that the fluid supplied from the fluid supply unit (70) is inputted into the fluid chamber (73c) so that the valve element (73a) is switched between the first and second operating positions in accordance with a pressure of the fluid supplied from the fluid supply unit (70).

2. The fluid flow path control unit (71E) of Claim 1,
wherein the flow path resistance of the fluid flow path (75a, 76a, 76b, 76c) is larger when the valve element (73a) is in the second operating position than when the valve element (73a) is in the first operating position.

3. The fluid flow path control unit (71E) of Claim 2,
wherein the fluid flow path (75a, 76a, 76b, 76c) has a first fluid flow path and a second fluid flow path that are disposed in parallel with each other.

4. The fluid flow path control unit (71E) of Claim 3,
wherein the flow path selector valve (73) is configured to establish a communicating state in the first fluid flow path and the second fluid flow path when the valve element (73a) is in the first operating position and to establish a cut-off state in the first fluid flow path when the valve element (73a) is in the second operating position.

5. The fluid flow path control unit (71E) of Claim 4,
wherein the first fluid flow path and the second fluid flow path have different flow path resistances.

6. The fluid flow path control unit (71E) of Claim 5,
wherein a diametrically constricted portion is formed in at least one of the first fluid flow path and the second fluid flow path.

7. The fluid flow path control unit (71E) of Claim 6,
wherein the diametrically constricted portion is formed only in one of the first fluid flow path and the second fluid flow path.

8. The fluid flow path control unit (71E) of Claim 6 or 7,
wherein the diametrically constricted portion is a choke.

9. The fluid flow path control unit (71 E) of Claim 4,
wherein the second fluid flow path is configured to establish a communication that passes round the flow path selector valve (73) between the fluid supply unit (70) and the fluid supplied portion.

10. The fluid flow path control unit (71E) of Claim 4,
wherein at least part of the first fluid flow path and at least part of the second fluid flow path are formed within the flow path selector valve (73).

11. The fluid flow path control unit (71E) of any one of Claims 1 to 10,
wherein the hydraulic path is configured to establish a communication between the fluid supply unit (70) and the hydraulic connection/disconnection unit (60A, 60B) when the valve element (73a) is in the first and second operating positions.

12. The fluid flow path control unit (71 E) of Claim 11,
wherein at least part of the hydraulic path is formed within the flow path selector valve (70).

13. The fluid flow path control unit (71E) of Claim 3,
wherein the flow path selector valve (73) is configured to establish a communicating state in the first fluid flow path when the valve element (73a) is in the first operating position and to establish a communicating state in the second fluid flow path when the valve element (73a) is in the second operating position, and
wherein a flow path resistance of the second fluid flow path is larger than a flow path resistance of the first fluid flow path.

14. The fluid flow path control unit (71E) of Claim 13,
wherein the flow path selector valve (73) is configured to establish a cut-off state in the second fluid flow path when the valve element (73a) is in the first operating position and to establish a cut-off state in the first fluid flow path when the valve element (73a) is in the second operating position.

15. The fluid flow path control unit (71E) of Claim 13 or 14,
wherein a flow path resistance structure is disposed in each of the first fluid flow path and the second fluid flow path, and
wherein the flow path resistance structure in the first fluid flow path and the flow path resistance structure in the second fluid flow path are formed so that a flow path resistance of the flow path resistance structure in the second fluid flow path is larger than that of the flow path resistance structure in the first fluid flow path.

16. The fluid flow path control unit (71E) of Claim 15,
wherein the flow path resistance structures are diametrically constricted portions that are disposed in the flow paths, and
wherein the first fluid flow path and the second fluid flow path are formed so that a minimum flow path sectional area of the diametrically constricted portion of the second fluid flow path is smaller than a minimum flow path sectional area of the diametrically constricted portion of the first fluid flow path.

17. The fluid flow path control unit (71E) of Claim 13 or 14,
wherein the first fluid flow path and the second fluid flow path are formed so that a flow path sectional area of the second fluid flow path is smaller than a flow path sectional area of the first fluid flow path.

18. The fluid flow path control unit (71E) of Claim 13 or 14,
wherein the first fluid flow path and the second fluid flow path are formed so that a flow path length of the second fluid flow path that extends from the fluid flow path selector valve to the fluid supplied portion is longer than a flow path length of the first fluid flow path that extends from the fluid flow path selector valve to the fluid supplied portion.

19. The fluid flow path control unit (71 E) of any one of Claims 3 to 18,
wherein the first fluid flow path and the second fluid flow path are configured to merge downstream of the flow path selector valve (73).

## Patentansprüche

1. Fluidströmungsweg-Steuereinheit (71E) für ein Fahrzeugantriebsystem (1), wobei das Fahrzeugantriebsystem (1) aufweist:
einen Motor (2A, 2B, 2C), der eingerichtet ist, um eine Antriebskraft zum Antreiben einen Fahrzeugs (3) zu erzeugen;
eine hydraulische Verbindungs-/Trenneinheit (60A, 60B), die an einem Kraftübertragungsweg, der zwischen dem Motor (2A, 2B, 2C) und einem Rad (LWr, RWr) definiert ist, vorgesehen ist, wobei die hydraulische Verbindungs-/Trenneinheit (60A, 60B) eingerichtet ist, um die Übertragung einer Kraft hierzwischen zu verbinden und zu trennen; und
einen mit einem Fluid versorgten Abschnitt (91), der wenigstens der Motor (2A, 2B, 2C) und der Kraftübertragungsweg ist und zu dem Fluid, das zum Kühlen oder zum Schmieren verwendet wird, zugeführt wird,
wobei die Fluidströmungsweg-Steuereinheit (71E) aufweist:
eine Fluidzuführeinheit (70), die vorgesehen ist, um Fluid zu der hydraulischen Verbindungs-/Trenneinheit (60A, 60B) über einen hydraulischen Weg (75a, 75b, 77) und zu dem mit Fluid versorgten Abschnitt (91) über einen Fluidströmungsweg (75a, 76a, 76b, 76c) zuzuführen; und
ein Strömungswegauswahlventil (73), welches in dem Fluidströmungsweg (75a, 76a, 76b, 76c) angeordnet ist, wobei das Strömungswegauswahlventil (73):
ein Ventilelement (73a), das zwischen einer ersten Arbeitsposition und einer zweiten Arbeitsposition schaltbar ist, wobei der Fluidströmungsweg (75a, 76a, 76b, 76c) einen Strömungswegwiderstand hat, der sich unterscheidet, wenn das Ventilelement (73a) in der ersten Arbeitsposition und wenn das Ventilelement (73a) in der zweiten Arbeitsposition ist,
ein Widerherstellungselement (73b), das eingerichtet ist, um das Ventilelement (73a) aus der zweiten Arbeitsposition in Richtung zu der ersten Arbeitsposition vorzuspannen und
eine Fluidkammer (73c), die eingerichtet ist, um Fluid zum Vorspannen des Ventilelements aus der ersten Arbeitsposition zu der zweiten Arbeitsposition hin aufzunehmen, und
**dadurch gekennzeichnet, dass** die Fluidkammer (73c) mit der Fluidzuführeinheit (70) in Verbindung steht, wenn das Ventilelement (73a) in der ersten und zweiten Arbeitsposition ist und das Fluid, welches von der Fluidzuführeinheit (70) zugeführt wurde, in die Fluidkammer (73c) eingeführt wird, sodass das Ventilelement (73a) zwischen der ersten und der zweiten Arbeitsposition in Übereinstimmung mit einem Druck des Fluides geschaltet wird, der von der Fluidzuführeinheit (70) zugeführt wird.

2. Fluidströmungsweg-Steuereinheit (71E) nach Anspruch 1,
wobei der Strömungswegwiderstand des Fluidströmungswegs (75a, 76a, 76b, 76c) größer ist, wenn das Ventilelement (73a) in der zweiten Arbeitsposition ist, als wenn das Ventilelement (73a) in der ersten Arbeitsposition ist.

3. Fluidströmungsweg-Steuereinheit (71E) nach Anspruch 2,
wobei der Fluidströmungsweg (75a, 76a, 76b, 76c) einen ersten Fluidströmungsweg und einen zweiten Fluidströmungsweg hat, die parallel zueinander angeordnet sind.

4. Fluidströmungsweg-Steuereinheit (71E) nach Anspruch 3,
wobei das Strömungswegauswahlventil (73) eingerichtet ist, um einen verbindenden Zustand in dem ersten Fluidströmungsweg und im zweiten Fluidströmungsweg auszubilden, wenn das Ventilelement (73a) in der erster Arbeitsposition ist, und einen Abtrenn-Zustand in dem ersten Fluidströmungsweg ausbildet, wenn das Ventilelement (73a) in der zweiten Arbeitsposition ist.

5. Fluidströmungsweg-Steuereinheit (71E) nach Anspruch 4,
wobei der ersten Fluidströmungsweg und der zweite Fluidströmungsweg unterschiedliche Strömungswegwiderstände haben.

6. Fluidströmungsweg-Steuereinheit (71E) nach Anspruch 5,
wobei eine diametral beschränkter Abschnitt in wenigstens dem ersten Fluidströmungsweg oder dem zweiten Fluidströmungsweg ausgebildet ist.

7. Fluidströmungsweg-Steuereinheit (71E) nach Anspruch 6,
wobei der diametral beschränkte Abschnitt nur in dem ersten Fluidströmungsweg oder dem zweiten Fluidströmungsweg ausgebildet ist.

8. Fluidströmungsweg-Steuereinheit (71E) nach Anspruch 6 oder 7,
wobei der diametral beschränkte Abschnitt eine Drossel ist.

9. Fluidströmungsweg-Steuereinheit (71E) nach Anspruch 4,
wobei der zweite Fluidströmungsweg ausgebildet ist, um eine Verbindung zu bilden, die um das Strömungswegauswahlventil (73) zwischen der Fluidzuführeinheit (70) und dem mit Fluid versorgten Abschnitt verläuft.

10. Fluidströmungsweg-Steuereinheit (71E) nach Anspruch 4,
wobei wenigstens ein Teil des ersten Fluidströmungswegs und wenigstens ein Teil des zweiten Fluidströmungswegs innerhalb des Fluidwegauswahlventils (73) ausgebildet sind.

11. Fluidströmungsweg-Steuereinheit (71E) nach einem der Ansprüche 1 bis 10,
wobei der hydraulische Weg ausgebildet ist, um eine Verbindung zwischen der Fluidzuführeinheit (70) und der hydraulischen Verbindungs-/Trenneinheit (60A, 60B) auszubilden, wenn das Ventilelement (73a) in der ersten und zweiten Arbeitsposition ist.

12. Fluidströmungsweg-Steuereinheit (71E) nach Anspruch 11,
wobei wenigstens ein Teil des hydraulischen Wegs innerhalb des Strömungswegauswahlventils (70) gebildet ist.

13. Fluidströmungsweg-Steuereinheit (71E) nach Anspruch 3,
wobei das Strömungswegauswahlventil (73) ausgebildet ist, um einen Verbindungszustand in dem ersten Fluidströmungsweg auszubilden, wenn das Ventilelement (73a) in der ersten Arbeitsposition ist, und einen Verbindungszustand in dem zweiten Fluidströmungsweg auszubilden, wenn das Ventilelement (73a) in der zweiten Arbeitsposition ist, und
wobei der Strömungswegwiderstand des zweiten Fluidströmungswegs größer ist als ein Strömungswiderstand des ersten Fluidströmungswegs.

14. Fluidströmungsweg-Steuereinheit (71E) nach Anspruch 13,
wobei das Fluidwegauswahlventil (73) ausgebildet ist, um einen Abtrennzustand in dem zweiten Fluidströmungsweg auszubilden, wenn das Ventilelement (73a) in der ersten Arbeitsposition ist, und einen Abtrennzustand in dem ersten Fluidströmungsweg auszubilden, wenn das Ventilelement (73a) in der zweiten Arbeitsposition ist.

15. Fluidströmungsweg-Steuereinheit (71E) nach Anspruch 13 oder 14,
wobei eine Strömungswegwiderstandskonstruktion in jedem des ersten Fluidströmungswegs und des zweiten Fluidströmungswegs angeordnet ist, und
wobei die Strömungswegwiderstandskonstruktion in dem ersten Fluidströmungsweg und die Strömungswegwiderstandskonstruktion in dem zweiten Fluidströmungsweg so gebildet sind, dass ein Strömungswegwiderstand der Strömungswegwiderstandskonstruktion in dem zweiten Fluidströmungsweg größer ist als der einer Strömungswegwiderstandskonstruktion in dem ersten Fluidströmungsweg.

16. Fluidströmungsweg-Steuereinheit (71E) nach Anspruch 15,
wobei die Strömungswegwiderstandskonstruktionen diametral beschränkte Abschnitte sind, die in den Strömungswegen angeordnet sind, und
wobei der erste Fluidströmungsweg und der zweite Fluidströmungsweg so gebildet sind, dass ein minimaler Strömungswegquerschnitt des diametral beschränkten Abschnitts des zweiten Fluidströmungswegs kleiner ist als ein minimaler Strömungswegquerschnitt des diametral beschränkten Abschnitts des ersten Fluidströmungswegs.

17. Fluidströmungsweg-Steuereinheit (71E) nach Anspruch 13 oder 14,
wobei der erste Fluidströmungsweg und der zweite Fluidströmungsweg so gebildet sind, dass ein Strömungswegquerschnitt des zweiten Fluidströmungswegs kleiner ist als ein Strömungswegquerschnitt des ersten Fluidströmungswegs.

18. Fluidströmungsweg-Steuereinheit (71E) nach Anspruch 13 oder 14 wobei der erste Fluidströmungsweg und der zweite Fluidströmungsweg so gebildet sind, dass eine Strömungsweglänge des zweiten Fluidströmungswegs, der sich von dem Fluidströmungswegauswahlventil zu dem mit Fluid versorgten Abschnitt erstreckt, länger ist als eine Strömungsweglänge des ersten Fluidströmungswegs, der sich von dem Fluidströmungswegauswahlventil zu dem mit Fluid versorgten Abschnitt erstreckt.

19. Fluidströmungsweg-Steuereinheit (71E) nach einem der Ansprüche 1 bis 18,
wobei der erste Fluidströmungsweg und der zweite Fluidströmungsweg eingerichtet sind um stromabwärts des Strömungswegauswahlventils (73) zu verschmelzen.

## Revendications

1. Unité de commande de chemin d'écoulement de fluide (71E) pour un système d'entraînement de véhicule (1), le système d'entraînement de véhicule (1) incluant :
un moteur (2A, 2B, 2C) configuré pour générer une force d'entraînement en vue d'entraîner un véhicule (3) ;
une unité de branchement/débranchement hydraulique (60A, 60B) qui est ménagée sur une ligne de transmission de puissance définie entre le moteur (2A, 2B, 2C) et une roue (LWr, RWr), l'unité de branchement/débranchement hydraulique (60A, 60B) étant configurée pour brancher et débrancher la transmission de puissance entre eux ; et
une portion alimentée en fluide (91) qui est au moins l'un du moteur (2A, 2B, 2C) et de la ligne de transmission de puissance et qu'un fluide qui est utilisé pour refroidissement ou lubrification alimente,
l'unité de commande de chemin d'écoulement de fluide (71E) incluant :
une unité d'alimentation en fluide (70) configurée pour alimenter en fluide l'unité de branchement/débranchement hydraulique (60A, 60B) à travers un chemin hydraulique (75a, 75b, 77) et la portion alimentée en fluide (91) à travers un chemin d'écoulement de fluide (75a, 76a, 76b, 76c) ; et
une soupape sélectrice de chemin d'écoulement (73) qui est disposée sur le chemin d'écoulement de fluide (75a, 76a, 76b, 76c), dans laquelle la soupape sélectrice de chemin d'écoulement (73) inclut
un élément de soupape (73a) qui est commutable entre une première position opérationnelle et une seconde position opérationnelle, dans laquelle le chemin d'écoulement de fluide (75a, 76a, 76b, 76c) a une résistance au chemin d'écoulement qui diffère entre lorsque l'élément de soupape (73a) est dans la première position opérationnelle et lorsque l'élément de soupape (73a) est dans la seconde position opérationnelle,
un organe de rétablissement (73b) configuré pour solliciter l'élément de soupape (73a) de la seconde position opérationnelle vers la première position opérationnelle et
une chambre de fluide (73c) configurée pour accueillir un fluide en vue de solliciter l'élément de soupape de la première position opérationnelle vers la seconde position opérationnelle, et
**caractérisée en ce que** la chambre de fluide (73c) communique avec l'unité d'alimentation en fluide (70) lorsque l'élément de soupape (73a) est dans les première et seconde positions opérationnelles, et
**en ce que** le fluide alimenté par l'unité d'alimentation en fluide (70) est fourni en entrée dans la chambre de fluide (73c) de sorte que l'élément de soupape (73a) soit commuté entre les première et seconde positions opérationnelles en conformité avec une pression du fluide alimenté par l'unité d'alimentation en fluide (70).

2. Unité de commande de chemin d'écoulement de fluide (71E) selon la revendication 1,
dans laquelle la résistance au chemin d'écoulement du chemin d'écoulement de fluide (75a, 76a, 76b, 76c) est plus grande lorsque l'élément de soupape (73a) est dans la seconde position opérationnelle que lorsque l'élément de soupape (73a) est dans la première position opérationnelle.

3. Unité de commande de chemin d'écoulement de fluide (71E) selon la revendication 2,
dans laquelle le chemin d'écoulement de fluide (75a, 76a, 76b, 76c) a un premier chemin d'écoulement de fluide et un second chemin d'écoulement de fluide qui sont disposés parallèlement l'un à l'autre.

4. Unité de commande de chemin d'écoulement de fluide (71E) selon la revendication 3,
dans laquelle la soupape sélectrice de chemin d'écoulement (73) est configurée pour établir un état de communication dans le premier chemin d'écoulement de fluide et le second chemin d'écoulement de fluide lorsque l'élément de soupape (73a) est dans la première position opérationnelle et pour établir un état de coupure dans le premier chemin d'écoulement de fluide lorsque l'élément de soupape (73a) est dans la seconde position opérationnelle.

5. Unité de commande de chemin d'écoulement de fluide (71E) selon la revendication 4,
dans laquelle le premier chemin d'écoulement de fluide et le second chemin d'écoulement de fluide ont des résistances au chemin d'écoulement différentes.

6. Unité de commande de chemin d'écoulement de fluide (71E) selon la revendication 5,
dans laquelle une portion diamétralement contrainte est formée dans au moins l'un du premier chemin d'écoulement de fluide et du second chemin d'écoulement de fluide.

7. Unité de commande de chemin d'écoulement de fluide (71E) selon la revendication 6,
dans laquelle la portion diamétralement contrainte est formée uniquement dans l'un du premier chemin d'écoulement de fluide et du second chemin d'écoulement de fluide.

8. Unité de commande de chemin d'écoulement de fluide (71E) selon la revendication 6 ou 7,
dans laquelle la portion diamétralement contrainte est un étrangleur.

9. Unité de commande de chemin d'écoulement de fluide (71E) selon la revendication 4,
dans laquelle le second chemin d'écoulement de fluide est configuré pour établir une communication qui passe autour de la soupape sélectrice de chemin d'écoulement (73) entre l'unité d'alimentation en fluide (70) et la portion alimentée en fluide.

10. Unité de commande de chemin d'écoulement de fluide (71E) selon la revendication 4,
dans laquelle au moins une partie du premier chemin d'écoulement de fluide et au moins une partie du second chemin d'écoulement de fluide sont formées au sein de la soupape sélectrice de chemin d'écoulement (73).

11. Unité de commande de chemin d'écoulement de fluide (71E) selon l'une quelconque des revendications 1 à 10,
dans laquelle le chemin hydraulique est configuré pour établir une communication entre l'unité d'alimentation en fluide (70) et l'unité de branchement/débranchement hydraulique (60A, 60B) lorsque l'élément de soupape (73a) est dans les première et seconde positions opérationnelles.

12. Unité de commande de chemin d'écoulement de fluide (71E) selon la revendication 11,
dans laquelle au moins une partie du chemin hydraulique est formée au sein de la soupape sélectrice de chemin d'écoulement (70).

13. Unité de commande de chemin d'écoulement de fluide (71E) selon la revendication 3,
dans laquelle la soupape sélectrice de chemin d'écoulement (73) est configurée pour établir un état de communication dans le premier chemin d'écoulement de fluide lorsque l'élément de soupape (73a) est dans la première position opérationnelle et pour établir un état de communication dans le second chemin d'écoulement de fluide lorsque l'élément de soupape (73a) est dans la seconde position opérationnelle, et
dans laquelle une résistance au chemin d'écoulement du second chemin d'écoulement de fluide est plus grande qu'une résistance au chemin d'écoulement du premier chemin d'écoulement de fluide.

14. Unité de commande de chemin d'écoulement de fluide (71E) selon la revendication 13,
dans laquelle la soupape sélectrice de chemin d'écoulement (73) est configurée pour établir un état de coupure dans le second chemin d'écoulement de fluide lorsque l'élément de soupape (73a) est dans la première position opérationnelle et pour établir un état de coupure dans le premier chemin d'écoulement de fluide lorsque l'élément de soupape (73a) est dans la seconde position opérationnelle.

15. Unité de commande de chemin d'écoulement de fluide (71E) selon la revendication 13 ou 14,
dans laquelle une structure de résistance au chemin d'écoulement est disposée dans chacun du premier chemin d'écoulement de fluide et du second chemin d'écoulement de fluide, et
dans laquelle la structure de résistance au chemin d'écoulement dans le premier chemin d'écoulement de fluide et la structure de résistance au chemin d'écoulement dans le second chemin d'écoulement de fluide sont formées pour qu'une résistance au chemin d'écoulement de la structure de résistance au chemin d'écoulement dans le second chemin d'écoulement de fluide soit plus grande que celle de la structure de résistance au chemin d'écoulement dans le premier chemin d'écoulement de fluide.

16. Unité de commande de chemin d'écoulement de fluide (71E) selon la revendication 15,
dans laquelle les structures de résistance au chemin d'écoulement sont des portions diamétralement contraintes qui sont disposées dans des chemins d'écoulement, et
dans laquelle le premier chemin d'écoulement de fluide et le second chemin d'écoulement de fluide sont formés pour qu'une surface minimale de section de chemin d'écoulement de la portion diamétralement contrainte du second chemin d'écoulement de fluide soit plus petite qu'une surface minimale de section de chemin d'écoulement de la portion diamétralement contrainte du premier chemin d'écoulement de fluide.

17. Unité de commande de chemin d'écoulement de fluide (71E) selon la revendication 13 ou 14,
dans laquelle le premier chemin d'écoulement de fluide et le second chemin d'écoulement de fluide sont formés pour qu'une surface de section de chemin d'écoulement du second chemin d'écoulement de fluide soit plus petite qu'une surface de section de chemin d'écoulement du premier chemin d'écoulement de fluide.

18. Unité de commande de chemin d'écoulement de fluide (71E) selon la revendication 13 ou 14,
dans laquelle le premier chemin d'écoulement de fluide et le second chemin d'écoulement de fluide sont formés pour qu'une longueur de chemin d'écoulement du second chemin d'écoulement de fluide qui s'étend de la soupape sélectrice de chemin d'écoulement de fluide à la portion alimentée en fluide soit plus longue qu'une longueur de chemin d'écoulement du premier chemin d'écoulement de fluide qui s'étend de la soupape sélectrice de chemin d'écoulement de fluide à la portion alimentée en fluide.

19. Unité de commande de chemin d'écoulement de fluide (71E) selon l'une quelconque des revendications 3 à 18,
dans laquelle le premier chemin d'écoulement de fluide et le second chemin d'écoulement de fluide sont configurés pour fusionner en aval de la soupape sélectrice de chemin d'écoulement (73).
